# EUROPEAN PATENT SPECIFICATION

(11) **EP 3 327 895 B1**
(45) Date of publication and mention of the grant of the patent: **30.03.2022**
(21) Application number: 16827392.8
(22) Date of filing: 24.05.2016
(51) Int. Cl.: H01M 4/505, H02J 7/04, H02J 7/00, H01M 10/48, H01M 10/44, H01M 10/0566, H01M 10/052, H01M 4/525

(54) **CHARGING METHOD, BATTERY DEVICE, CHARGING DEVICE, DEGRADATION DIAGNOSIS METHOD, BATTERY PACK, ELECTRIC VEHICLE, AND ELECTRICITY STORAGE DEVICE**
LADEVERFAHREN, BATTERIEVORRICHTUNG, LADEVORRICHTUNG, DIAGNOSEVERFAHREN FÜR LEISTUNGSABBAU, BATTERIEPACK, ELEKTROFAHRZEUG UND STROMSPEICHERVORRICHTUNG
PROCÉDÉ DE CHARGE, DISPOSITIF DE BATTERIE, DISPOSITIF DE CHARGE, PROCÉDÉ DE DIAGNOSTIC DE DÉGRADATION, BLOC-BATTERIE, VÉHICULE ÉLECTRIQUE, ET DISPOSITIF DE STOCKAGE D'ÉLECTRICITÉ

(30) Priority: 21.07.2015 JP 2015144164
(43) Date of publication of application: 30.05.2018
(73) Proprietor: Murata Manufacturing Co., Ltd., Nagaokakyo-shi, Kyoto 617-8555 (JP)
(72) Inventor: MIYAKI, Yukio, Koriyama-shi Fukushima 963-0531 (JP); OKUNO, Moriaki, Koriyama-shi Fukushima 963-0531 (JP); KAWAHARA, Takuma, Koriyama-shi Fukushima 963-0531 (JP); HONDA, Kazuki, Koriyama-shi Fukushima 963-0531 (JP); TAKAHASHI, Sho, Koriyama-shi Fukushima 963-0531 (JP)
(74) Representative: Witte, Weller & Partner Patentanwälte mbB
(86) International application number: PCT/JP2016/002510
(87) International publication number: WO 2017/013823

(56) References cited:
- EP-A2- 0 005 841
- CA-A- 1 147 802
- JP-A- 2010 008 067
- JP-A- 2014 157 812
- US-A- 4 388 582

## Description

### TECHNICAL FIELD

The present technology relates to a lithium ion secondary battery having a laminate film as an exterior body, and relates to a charging method, a battery device, a charging device, a degradation diagnosis method, a battery pack, an electric vehicle, and an electricity storage device capable of preventing degradation of a battery without prolonging charging time.

### BACKGROUND ART

In recent years, many portable apparatuses such as a mobile phone, a tablet computer, or a small electric power tool have appeared, and reduction in size, weight, and charging time is desired. Along with this, a demand for a battery used as a power supply for a portable apparatus is rapidly increasing, and as a battery satisfying such a demand, a lithium ion secondary battery using a laminate film is preferable.

It is known that a capacity of a lithium ion secondary battery gradually decreases due to repeated charge/discharge thereof. It is known not only that capacity degradation increases on a higher temperature side than room temperature but also that degradation increases also on a lower temperature side than room temperature. A phenomenon that degradation is larger as a charging current is larger is known. This degradation phenomenon can be suppressed by reducing a charging current. However, charging time is prolonged disadvantageously, and a charging method capable of achieving both long lifetime and short charging time has been desired.

Patent Document 6, according to its abstract, relates to a method of fast charging batteries by means of precise analysis of the profile of the variation with time of a characteristic of the battery which is indicative of the variation in stored chemical energy as the battery is charged. The method specifically comprises analyzing the profile for the occurrence of a particular series of events preferably including one or more inflection points which precisely identify the point in time at which the application of a fast charge rate should be discontinued. Additional methods of analysis provide for termination or control of the charging current upon the occurrence of other events such as limiting values on time, voltage or voltage slope or a negative change in the level of stored energy. Apparatus for performing these methods comprises a suitable power supply and a microcomputer for analyzing the profile and controlling the power supply.

Patent Document 7 and Patent Document 8, according to their abstracts, relate to a method and apparatus for charging batteries at a high rate without damaging or reducing the life of the battery. The method comprises monitoring the level of energy stored in the battery, preferably by monitoring a particular battery characteristic. The variation of the characteristic with time is analyzed, preferably by measuring successive values of the characteristic, computing the slope and comparing successiye slope values so as to identify inflection points and other significant events in the variation of the characteristic. Apparatus for performing these methods and for controlling the supply of energy is disclosed which comprises a suitable power supply and a programed microcomputer for measuring successive values of the characteristic, performing the required computations, and controlling the supply of energy applied to the battery by the power supply.

### CITATION LIST

### PATENT DOCUMENT

Patent Document 1: Japanese Patent Application Laid-Open No. 2012-55092
Patent Document 2: Japanese Patent Application Laid-Open No. 2010-49916
Patent Document 3: Japanese Patent Application Laid-Open No. 2005-192383
Patent Document 4: Japanese Patent Application Laid-Open No. 2001-52760
Patent Document 5: Japanese Patent Application Laid-Open No. 6-237539
Patent Document 6: EP 0 005 841 A2
Patent Document 7: CA 1 147 802 A
Patent Document 8: US 4,388,582 A

### SUMMARY OF THE INVENTION

### PROBLEMS TO BE SOLVED BY THE INVENTION

Patent Document 1 has proposed calculating a degradation acceleration coefficient from use time, and reducing a charging voltage or a charging current according to the degradation acceleration coefficient. As illustrated in Fig. 9 of Patent Document 1, only a phenomenon that degradation increases (a temperature degradation acceleration coefficient increases) as a temperature rises is taken into consideration, and a phenomenon that degradation increases also on a lower temperature side than room temperature is overlooked. An effect of prolonging lifetime is insufficient.

Patent Document 2 has proposed performing two-stage charging of high charging current-low charging voltage and low charging current-high charging voltage without judging a degradation state of a battery in charging in a low temperature region, and preventing battery degradation.

Studies by the present technicians have found the following. That is, it is necessary to change control of a charging method against degradation on a low temperature side at any time according to a degradation state of a battery. On the basis of the same judging criterion from the beginning to the end of cycles, even though degradation can be suppressed at a glance at the beginning of the cycles, adjustment of the charging method is unsuitable after the middle of the cycles, and degradation cannot be prevented.

Patent Document 3 has disclosed that lifetime of a battery is prolonged by reducing a voltage of constant-voltage charging according to the number of charging times or the total charging integrated amount.

Studies by the present technicians have found that degradation of a battery largely depends not only on the number of times and the total charging integrated amount but also on a temperature environment. If this is not taken into account, a charging control method is insufficient for prolonging a lifetime.

Patent Document 4 describes that a battery voltage for constant-voltage charging is changed according to a temperature at the time of starting constant-current constant-voltage charging.

According to studies by the present technicians, particularly in an environment on a low temperature side, reduction of a charging voltage reduces a charging electric quantity disadvantageously, and a charging current in constant-current charging is not controlled, resulting in being insufficient for prolonging lifetime.

Patent Document 5 has proposed changing a current value at which constant-voltage charging is terminated according to a temperature.

An effect on degradation on a high temperature side is described. However, according to studies by the present technicians, an effect is not recognized particularly in an environment on a low temperature side.

As described above, various charging methods have been proposed for prolonging lifetime of a battery, but it has been insufficient to achieve both long lifetime and short charging time.

The present technology proposes a battery charging method, a battery device, a charging device, a degradation diagnosis method, a battery pack, an electric vehicle, and an electricity storage device capable of achieving both long lifetime and short charging time.

### SOLUTIONS TO PROBLEMS

In order to solve the above-described problems, there are provided a charging method, a battery device, a charging device, a degradation diagnosis method, a battery pack, an electric vehicle, and an electricity storage device according to the independent claims.

### EFFECTS OF THE INVENTION

According to at least one embodiment, degradation on a low temperature side can be suppressed and lifetime of a battery can be prolonged while charging time is kept short. Note that the effects described herein are not necessarily limited, and may be any of the effects described in the present technology.

### BRIEF DESCRIPTION OF DRAWINGS

Fig. 1 is an exploded perspective view illustrating an example of a configuration of a laminate film type nonaqueous electrolyte battery to which the present technology can be applied.
Fig. 2 is a cross-sectional view illustrating a cross-sectional configuration taken along the line I-I of a wound electrode body illustrated in Fig. 1.
Fig. 3 is an exploded perspective view illustrating another example of the configuration of the laminate film type nonaqueous electrolyte battery to which the present technology can be applied.
Fig. 4 is a graph for explaining a constant-current constant-voltage charging method to which the present technology can be applied.
Fig. 5 is a graph used for explaining an inflection point of a charging current.
Fig. 6 is a graph for explaining a pulse charging method to which the present technology can be applied.
Fig. 7 is a graph for explaining a step charging method to which the present technology can be applied.
Fig. 8 is a graph for explaining a constant-voltage charging method to which the present technology can be applied.
Fig. 9 is a block diagram of a first example of a battery pack to which the present technology is applied.
Fig. 10 is a block diagram of a second example of the battery pack to which the present technology is applied.
Fig. 11 is a block diagram of a third example of the battery pack to which the present technology is applied.
Fig. 12 is a block diagram of a fourth example of the battery pack to which the present technology is applied.
Fig. 13 is a block diagram of an example of an electricity storage device to which the present technology can be applied.
Fig. 14 is a more detailed block diagram of the electricity storage device.
Fig. 15 is a schematic diagram illustrating an application example of the present technology.
Fig. 16 is a schematic diagram illustrating an application example of the present technology.

### MODE FOR CARRYING OUT THE INVENTION

Hereinafter, an embodiment of the present technology will be described. Note that the embodiment described below is a preferable specific example of the present technology and various technically preferable limitations are given thereto, but the scope of the present technology is not limited to the embodiment unless there is description for particularly limiting the present technology in the following description.

### <1. Example of battery>

(1-1) Configuration of nonaqueous electrolyte battery A laminate film type battery to which the present technology can be applied will be described.

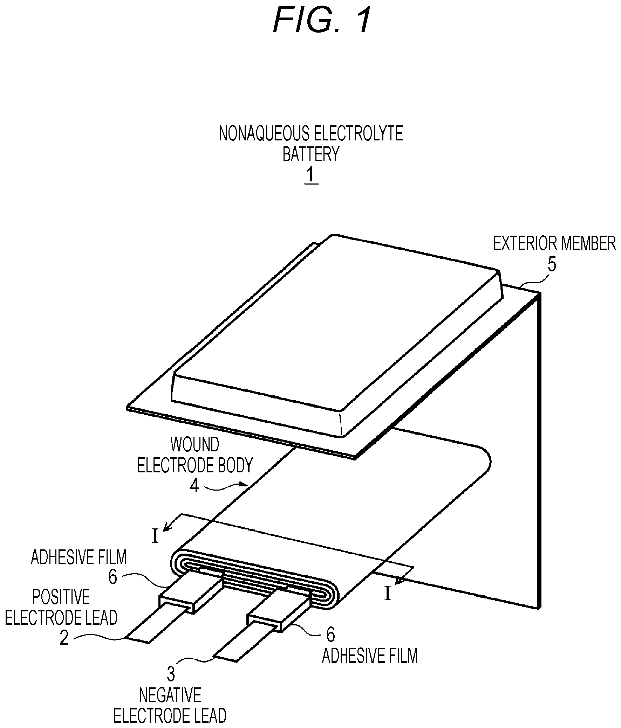

Fig. 1 illustrates a configuration of such a nonaqueous electrolyte battery 1. This nonaqueous electrolyte battery 1 is so-called a laminate filmtype, and houses a wound electrode body 4 to which a positive electrode lead 2 and a negative electrode lead 3 are attached inside a film-like exterior member 5.

Each of the positive electrode lead 2 and the negative electrode lead 3 goes from an inside of the exterior member 5 to an outside thereof, and for example, is led out in the same direction. For example, each of the positive electrode lead 2 and the negative electrode lead 3 is formed of a metal material such as aluminum, copper, nickel, or stainless steel, and has a thin plate shape or a mesh shape.

For example, the exterior member 5 is formed of a laminate film having resin layers formed on both surfaces of a metal layer. In the laminate film, an outer resin layer is formed on a surface of the metal layer exposed to an outside of the battery, and an inner resin layer is formed on an inner surface of the battery facing a power generation element such as the wound electrode body 4.

The metal layer plays the most important role of preventing entrance of moisture, oxygen, and light and protecting contents, and is preferably formed of aluminum (Al) or stainless steel due to lightness, elongation, price, and ease of processing. The outer resin layer has a beautiful appearance, toughness, flexibility, and the like, and a resin material such as nylon or polyethylene terephthalate (PET) is used therefor. The inner resin layers melt by heat or ultrasonic waves and are fused to each other. Therefore, a polyolef in resin is suitably used, and cast polypropylene (CPP) is frequently used therefor. An adhesive layer may be provided as necessary between the metal layer and each of the outer resin layer and the inner resin layer.

The exterior member 5 is provided with a recess portion for housing the wound electrode body 4, formed, for example, by deep-drawing in a direction from the inner resin layer side to the outer resin layer side, and the inner resin layer is disposed so as to face the wound electrode body 4. The facing inner resin layers of the exterior member 5 closely adhere to each other at an outer edge portion of the recess portion by fusion or the like. An adhesive film 6 for improving adhesiveness between the inner resin layer of the exterior member 5 and each of the positive electrode lead 2 and the negative electrode lead 3 formed of a metal material is disposed between the exterior member 5 and each of the positive electrode lead 2 and the negative electrode lead 3. The adhesive film 6 is formed of a resin material having high adhesiveness to a metal material, and is formed, for example, of a polyolefin resin such as polyethylene, polypropylene, or modified polyethylene or modified polypropylene obtained by modifying these materials.

Note that, in place of the laminate film in which the metal layer is formed of aluminum (Al) or stainless steel, the exterior member 5 may be formed of a laminate film having another structure, a polymer film such as polypropylene, or a metal film.

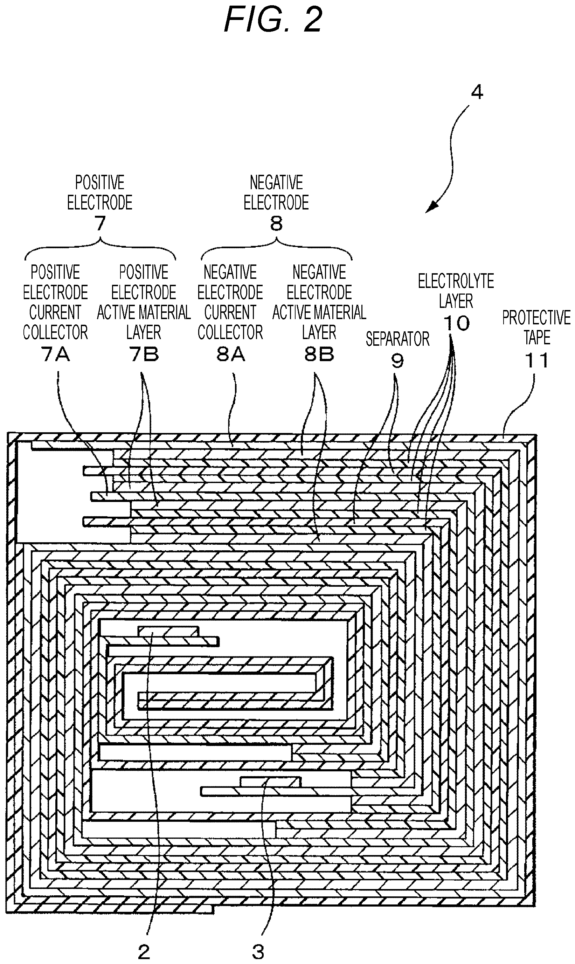

Fig. 2 illustrates a cross-sectional structure taken along the line I-I of the wound electrode body 4 illustrated in Fig. 1. The wound electrode body 4 is obtained by laminating and winding a positive electrode 7 and a negative electrode 8 through a separator 9 and an electrolyte layer 10, and an outermost peripheral portion thereof is protected by a protective tape 11 as necessary.

### [Positive electrode]

The positive electrode 7 has a structure in which a positive electrode active material layer 7B is provided on one surface or both surfaces of a positive electrode current collector 7A.

The positive electrode 7 is obtained by forming the positive electrode active material layer 7B containing a positive electrode active material on both surfaces of the positive electrode current collector 7A. Examples of the positive electrode current collector 7A include a metal foil such as an aluminum (Al) foil, a nickel (Ni) foil, or a stainless steel (SUS) foil.

The positive electrode active material layer 7B contains, for example, a positive electrode active material, aconductive agent, and a binder. As the positive electrode active material, any one or more kinds of positive electrode materials capable of occluding and releasing lithium can be used, and the positive electrode active material may contain another material such as a binder or a conductive agent as necessary.

Preferable examples of the positive electrode material capable of occluding and releasing lithium include a lithium-containing compound. This is because a high energy density can be obtained. Examples of the lithium-containing compound include a composite oxide containing lithium and a transition metal element, and a phosphate compound containing lithium and a transition metal element. Among these compounds, a compound containing at least one selected from the group consisting of cobalt (Co), nickel (Ni), manganese (Mn), and iron (Fe) as a transition metal element is preferable. This is because a higher voltage can be obtained.

Examples of the positive electrode material include a lithium-containing compound represented by LiₓM1O₂ or Li_{y}M2PO₄. In the formula, each of M1 and M2 represents one or more transition metal elements. Values of x and y depend on a charge/discharge state of a battery, and usually satisfy 0.05 ≤ x ≤ 1.10 and 0.05 ≤ y ≤ 1.10. Examples of the complex oxide containing lithium and a transition metal element include a lithium cobalt composite oxide (LiₓCoO₂), a lithium nickel composite oxide (LiₓNiO₂), a lithium nickel cobalt composite oxide (LiₓNi_{1-z}Co_{z}O₂ (0 < z < 1), a lithium nickel cobalt manganese complex oxide (LiₓNi_{(1-v-w)}CoᵥMn_{w}O₂ (0 < v + w < 1, v > 0, w > 0)), a lithium manganese complex oxide having a spinel type structure (LiMn₂O₄), and a lithium manganese nickel composite oxide (LiMn₂₋ₜNiₜO₄ (0 < t < 2)). Among these compounds, a composite oxide containing cobalt, a composite oxide containing cobalt, nickel, and manganese, and a composite oxide containing cobalt, nickel, and aluminum are preferable. This is because a high capacity can be obtained and excellent cycle characteristics can be also obtained. In addition, examples of the phosphate compound containing lithium and a transition metal element include a lithium iron phosphate compound (LiFePO₄) and a lithium iron manganese phosphate compound (LiFe₁₋ᵤMnᵤPO₄ (0 < u < 1)).

Specific examples of such a lithium composite oxide include lithium cobaltite (LiCoO₂), lithium nickelate (LiNiO₂), and lithium manganate (LiMn₂O₄). Furthermore, a solid solution obtained by replacing a part of a transition metal element with another element can be used. Examples thereof include a nickel cobalt composite lithium oxide (LiNi_{0.5}Co_{0.5}O₂, LiNi_{0.8}Co_{0.2}O₂, or the like) . These lithium composite oxides can generate a high voltage and have an excellent energy density.

Furthermore, composite particles obtained by coating surfaces of particles formed of any one of the above-described lithium-containing compounds with fine particles formed of any other lithium-containing compound may be used from a viewpoint of obtaining higher electrode packing properties and cycle characteristics.

Other examples of the positive electrode material capable of occluding and releasing lithium include: an oxide such as vanadium oxide (V₂O₅), titanium dioxide (TiO₂), or manganese dioxide (MnO₂) ; a disulfide such as iron disulfide (FeS₂), titanium disulfide (TiS₂), or molybdenum disulfide (MoS₂); a chalcogenide containing no lithium (particularly, a layered compound or a spinel type compound) such as niobium diselenide (NbSe₂); a lithium-containing compound containing lithium; sulfur; and a conductive polymer such as polyaniline, polythiophene, polyacetylene, orpolypyrrole. Of course, the positive electrode material capable of occluding and releasing lithium may be other than the above-described materials. In addition, two or more kinds of the above-described series of positive electrode materials may be mixed in an arbitrary combination.

Examples of the conductive agent include a carbon material such as carbon black or graphite. As the binder, for example, at least one selected from resin materials such as polyvinylidene fluoride (PVdF), polytetrafluoroethylene (PTFE), polyacrylonitrile (PAN), styrene-butadiene rubber (SBR), and carboxymethyl cellulose (CMC), a copolymer mainly containing these resin materials, and the like is used.

The positive electrode 7 includes a positive electrode lead 2 connected to one end of the positive electrode current collector 7A by spot welding or ultrasonic welding. The positive electrode lead 2 is desirably formed of a metal foil or has a mesh shape. However, even if the positive electrode lead 2 is not a metal, there is no problem as long as the positive electrode lead 2 is electrochemically and chemically stable and can be conductive. Examples of a material of the positive electrode lead 2 include aluminum (Al) and nickel (Ni).

### [Negative electrode]

The negative electrode 8 has a structure in which a negative electrode active material layer 8B is provided on one surface or both surfaces of a negative electrode current collector 8A, and is disposed such that the negative electrode active material layer 8B faces the positive electrode active material layer 7B.

Note that the negative electrode active material layer 8B may be provided only on one surface of the negative electrode current collector 8A although not illustrated. For example, the negative electrode current collector 8A is formed of a metal foil such as a copper foil.

The negative electrode active material layer 8B includes one or more negative electrode materials capable of occluding and releasing lithium as a negative electrode active material, and may include another material such as a binder or a conductive agent similar to those in the positive electrode active material layer 7B as necessary.

Note that, in the nonaqueous electrolyte battery 1, an electrochemical equivalent of a negative electrode material capable of occluding and releasing lithium is larger than that of the positive electrode 7, and theoretically, a lithiummetal is not precipitated on the negative electrode 8 during charging.

In addition, the nonaqueous electrolyte battery 1 is designed such that an open circuit voltage (that is, a battery voltage) in a fully charged state is within a range of, for example, 2.80 V or more and 6.00 V or less. Particularly, in a case of using a material which becomes a lithium alloy around 0 V with respect to Li/Li⁺ as a negative electrode active material, the nonaqueous electrolyte battery 1 is designed such that an open circuit voltage in a fully charged state is within a range of, for example, 4.20 V or more and 6.00 V or less. In this case, the open circuit voltage in the fully charged state is preferably 4.25 V or more and 6.00 V or less. In a case where the open circuit voltage in the fully charged state is 4.25 V or more, the release amount of lithium per unit mass increases even with the same positive electrode active material as compared with a 4.20 V battery. Therefore, the amounts of the positive electrode active material and the negative electrode active material are adjusted in accordance therewith. As a result, a high energy density can be obtained.

Examples of the negative electrode material capable of occluding and releasing lithium include a carbon material such as hardly graphitizable carbon, easily graphitizable carbon, graphite, pyrolytic carbon, coke, glassy carbon, an organic polymer compound firedbody, carbon fiber, or activatedcarbon. Among these materials, examples of the coke include pitch coke, needle coke, and petroleum coke. The organic polymer compound fired body is obtained by firing and carbonizing a polymer material such as a phenol resin or a furan resin at an appropriate temperature. Some organic polymer compound fired bodies are classified into hardly graphitizable carbon or easily graphitizable carbon. These carbon materials are preferable because a change in a crystal structure occurring during charge/discharge is very small, a high charge/discharge capacity can be obtained, and excellent cycle characteristics can be obtained. Particularly, graphite is preferable because a high energy density can be obtained due to a large electrochemical equivalent thereof. In addition, the hardly graphitizable carbon is preferable because excellent characteristics can be obtained. Furthermore, a material having a low charge/discharge potential, specifically having a charge/discharge potential close to a lithium metal is preferable because a high energy density of a battery can be realized easily.

Examples of the other negative electrode material capable of occluding and releasing lithium and obtaining a high capacity include a material capable of occluding and releasing lithium and containing at least one of metal elements and metalloid elements as a constituent element. This is because a high energy density can be obtained by use of such a material. Particularly, use of such a material together with a carbon material is more preferable because a high energy density and excellent cycle characteristics can be obtained simultaneously. This negative electrode material may be a simple substance of a metal element or a metalloid element, an alloy thereof, or a compound thereof, and may have at least partially one or more kinds of phases thereof. Note that, in the present technology, the alloy includes an alloy formed of one or more kinds of metal elements and one or more kinds of metalloid elements in addition to an alloy formed of two or more kinds of metal elements. In addition, a nonmetallic element may be included. A structure thereof includes a solid solution, a eutectic (eutectic mixture), an intermetallic compound, and coexistence of two or more kinds thereof.

Examples of the metal element or metalloid element constituting the negative electrode material include a metal element or a metalloid element capable of forming an alloy with lithium. Specific examples thereof include magnesium (Mg), boron (B), aluminum (Al), titanium (Ti), gallium (Ga), indium (In), silicon (Si), germanium (Ge), tin (Sn), lead (Pb), bismuth (Bi), cadmium (Cd), silver (Ag), zinc (Zn), hafnium (Hf), zirconium (Zr), yttrium (Y), palladium (Pd), and platinum (Pt). These elements may be crystalline or amorphous.

Examples of the negative electrode material include lithium titanate (Li₄Ti₅O₁₂). In addition, as the negative electrode material, a material containing a metal element or a metalloid element of Group 4B in the short period periodic table as a constituent element is preferable, a material containing at least one of silicon (Si) and tin (Sn) as a constituent element is more preferable, and a material containing at least silicon is particularly preferable. This is because silicon (Si) and tin (Sn) have a high ability to occlude and release lithium (Li), and a high energy density can be obtained. Examples of the negative electrode material containing at least one of silicon and tin include a simple substance of silicon, an alloy thereof, or a compound thereof, a simple substance of tin, an alloy thereof, or a compound thereof, and a material having at least partially one or more kinds of phases thereof.

Examples of the alloy of silicon include an alloy containing at least one of the group consisting of tin (Sn), nickel (Ni), copper (Cu), iron (Fe), cobalt (Co), manganese (Mn), zinc (Zn), indium (In), silver (Ag), titanium (Ti), germanium (Ge), bismuth (Bi), antimony (Sb), and chromium (Cr) as a second constituent element other than silicon. Examples of the alloy of tin include an alloy containing at least one of the group consisting of silicon (Si), nickel (Ni), copper (Cu), iron (Fe), cobalt (Co), manganese (Mn), zinc (Zn), indium (In), silver (Ag), titanium (Ti), germanium (Ge), bismuth (Bi), antimony (Sb), and chromium (Cr) as a second constituent element other than tin (Sn).

Examples of the compound of tin (Sn) or the compound of silicon (Si) include a compound containing oxygen (O) or carbon (C). The compound of tin (Sn) or the compound of silicon (Si) may contain the above-described second constituent element in addition to tin (Sn) or silicon (Si).

Among these materials, as the negative electrode material, a SnCoC-containing material containing cobalt (Co), tin (Sn), and carbon (C) as constituent elements, in which the content of carbon is 9.9% by mass or more and 29.7% by mass or less and the content of cobalt (Co) with respect to the total mass of tin (Sn) and cobalt (Co) is 30% by mass or more and 70% by mass or less, is preferable. This is because a high energy density can be obtained and excellent cycle characteristics can be obtained within such a composition range.

This SnCoC-containing material may further contain another constituent element as necessary. Preferable examples of the other constituent element include silicon (Si), iron (Fe), nickel (Ni), chromium (Cr), indium (In), niobium (Nb), germanium (Ge), titanium (Ti), molybdenum (Mo), aluminum (Al), phosphorus (P), gallium (Ga), and bismuth (Bi), and two or more kinds thereof may be contained. This is because a capacity or cycle characteristics can be further improved.

### [Separator]

The separator 9 is a porous film formed of an insulating film having a high ion permeability and a predetermined mechanical strength. In a case where the separator 9 is applied to a nonaqueous electrolyte battery, a nonaqueous electrolytic solution is held in pores of the separator 9. While having a predetermined mechanical strength, the separator 9 needs to have high resistance to a nonaqueous electrolytic solution, low reactivity, and difficulty of expansion. In addition, in a case where the separator 9 is used for an electrode body having a wound structure, flexibility is also required.

Preferable examples of a resin material constituting such a separator 9 include a polyolefin resin such as polypropylene or polyethylene, an acrylic resin, a styrene resin, a polyester resin, and a nylon resin. Particularly, polyethylene such as low-density polyethylene, high-density polyethylene, or linear polyethylene, low molecular weight wax thereof, and a polyolefin resin such as polypropylene are preferably used because of a suitable melting temperature and easily availability. Furthermore, a structure obtained by laminating these two or more kinds of porous films or a porous film formed by melt-kneading two or more kinds of resin materials may be used. A separator containing a porous film formed of a polyolefin resin has excellent separability between the positive electrode 7 and the negative electrode 8, and can further reduce reduction in internal short circuit.

The thickness of the separator 9 can be arbitrarily set as long as being equal to or more than the thickness capable of maintaining a required strength. Preferably, the separator 9 has an ion permeability for insulating the positive electrode 7 from the negative electrode 8 to prevent short circuit or the like and suitably performing a battery reaction through the separator 9, and has such a thickness that a volume efficiency of an active material layer contributing to a battery reaction can be as high as possible in a battery. Specifically, the thickness of the separator 9 is preferably 5 µm or more and 20 µm or less.

A porosity in the separator 9 is preferably 25% or more and 80% or less, and more preferably 25% or more and 40% or less in order to obtain the above-described ion permeability. A porosity smaller than the above-described range hinders movement of ions in a nonaqueous electrolytic solution involved in charge/discharge, although depending on a current value at the time of actual use of a battery, characteristics of a porous structure or the like of the separator 9, and the thickness thereof. Therefore, load characteristics are deteriorated and it is difficult to extract a sufficient capacity at the time of large current discharging. In addition, a porosity larger than the above-described range decreases a separator strength.

### [Electrolyte layer]

The electrolyte layer 10 may be a gel electrolyte layer containing a nonaqueous electrolytic solution and a resin material serving as a holding body for holding this nonaqueous electrolytic solution. In this case, the electrolyte layer 10 is an ionic conductor in which a polymer material is in a gel state due to the nonaqueous electrolytic solution.

The electrolyte layer 10 is formed between the positive electrode 7 and the negative electrode 8. More specifically, for example, the electrolyte layer 10 is formed between the positive electrode 7 and the negative electrode 8. Alternatively, in a case where the separator 9 is included, the electrolyte layer 10 is formed between the positive electrode 7 and the separator 9 and/or between the negative electrode 8 and the separator 9. Note that, in the example illustrated in the figure 2, the electrolyte layer 10 is formed both between the positive electrode 7 and the separator 9 and between the negative electrode 8 and the separator 9. The electrolyte layer 10 can contain solid particles such as inorganic particles or organic particles.

In a case where the electrolyte layer 10 is provided only between the negative electrode 8 and the separator 9, a flat-shaped layer having excellent heat resistance and oxidation resistance may be provided on a side surface of the separator 9 facing the positive electrode, positioned between the positive electrode 7 and the separator 9. In a case where a fully charged voltage of a battery is set to 4.25 V or more, or the like, that is higher than that in prior art, the vicinity of the positive electrode may be in an oxidizing atmosphere at the time of full charge. Therefore, the side surface facing the positive electrode may be oxidized and degraded. In order to suppress the oxidization and degradation, a layer containing a resin material having particularly excellent properties against heat resistance and oxidation resistance may be formed.

Meanwhile, in a case where the electrolyte layer 10 is provided between the positive electrode 7 and the separator 9, even in a case where the separator 9 melts, the particles keep insulation between the positive electrode 7 and the negative electrode 8, and it is possible to continuously suppress transfer of heat to the positive electrode 7 by absorption of heat generated in the negative electrode 8. Therefore, it is possible to create a time margin before the nonaqueous electrolytic solution at an interface between the negative electrode 8 and the separator 9 evaporates and a discharging reaction stops.

Furthermore, a case where the electrolyte layer 10 is provided between the negative electrode 8 and the separator 9 and between the positive electrode 7 and the separator 9 is particularly preferable because the electrolyte layer 10 can have both functions in a case of being provided between the negative electrode 8 and the separator 9 and in a case of being disposed between the positive electrode 7 and the separator 9. The electrolyte layer may be formed only of a nonaqueous electrolytic solution without containing a resin material.

Hereinafter, the nonaqueous electrolytic solution and the resin material constituting the electrolyte layer 10 will be described.

### [Nonaqueous electrolytic solution]

The nonaqueous electrolytic solution contains an electrolyte salt and a nonaqueous solvent which dissolves this electrolyte salt.

### [Electrolyte salt]

For example, the electrolyte salt contains one or more light metal compounds such as a lithium salt. Examples of this lithium salt include lithium hexafluorophosphate (LiPF₆), lithium tetrafluoroborate (LiBF₄), lithium perchlorate (LiClO₄), lithium hexafluoroarsenate (LiAsF₆), lithium tetraphenylborate (LiB(C₆H₄)₄), lithium methanesulfonate (LiCH₃SO₃), lithium trifluoromethanesulfonate (LiCF₃SO₃), lithium tetrachloroaluminate (LiAlCl₄), dilithium hexafluorosilicate (Li₂SiF₆), lithium chloride (LiCl ), and lithium bromide (LiBr) . Among these lithium salts, at least one of the group consisting of lithium hexafluorophosphate, lithium tetrafluoroborate, lithium perchlorate, and lithium hexafluoroarsenate is preferable, and lithium hexafluorophosphate is more preferable.

### [Nonaqueous solvent]

Examples of the nonaqueous solvent include: a lactone-based solvent such as γ-butyrolactone, γ-valerolactone, δ-valerolactone, or ε-caprolactone; a carbonate-based solvent such as ethylene carbonate, propylene carbonate, butylene carbonate, vinylene carbonate, dimethyl carbonate, ethyl methyl carbonate, or diethyl carbonate; an ether-based solvent such as 1,2-dimethoxyethane, 1-ethoxy-2-methoxyethane, 1,2-diethoxyethane, tetrahydrofuran, or2-methyltetrahydrofuran; anitrile-based solvent such as acetonitrile; a sulfolane-based solvent; a phosphoric acid; a phosphate solvent; and a pyrrolidone. These solvents may be used singly or in mixture of two or more kinds thereof.

In addition, as the nonaqueous solvent, a cyclic carbonate and a chain carbonate are preferably mixed to be used. The nonaqueous solvent more preferably contains a compound in which a part or all of hydrogen atoms in a cyclic carbonate or a chain carbonate are fluorinated. Preferable examples of the fluorinated compound include fluoroethylene carbonate (4-fluoro-1,3-dioxolan-2-one: FEC) and difluoroethylene carbonate (4,5-difluoro-1,3-dioxolan-2-one: DFEC). This is because charge/discharge cycle characteristics can be improved even inacaseof using the negative electrode 8 containing a compound such as silicon (Si), tin (Sn), or germanium (Ge) as the negative electrode active material. Among these compounds, difluoroethylene carbonate is preferably used as the nonaqueous solvent. This is because an effect of improving cycle characteristics is excellent.

### [Resin material]

As the resin material, a matrix polymer compound compatible with a solvent or the like can be used. Examples of such a resin material include: a fluorine-containing resin such as polyvinylidene fluoride or polytetrafluoroethylene; a fluorine-containing rubber such as a vinylidene fluoride-tetrafluoroethylene copolymer or an ethylene-tetrafluoroethylene copolymer; a rubber such as a styrene-butadiene copolymer and a hydride thereof, an acrylonitrile-butadiene copolymer and a hydride thereof, an acrylonitrile-butadiene-styrene copolymer and a hydride thereof, a methacrylate-acrylate copolymer, a styrene-acrylate copolymer, an acrylonitrile-acrylate copolymer, ethylene propylene rubber, polyvinyl alcohol, or polyvinyl acetate; a cellulose derivative such as ethyl cellulose, methyl cellulose, hydroxyethyl cellulose, or carboxymethyl cellulose; and a resin having at least one of a melting point and a glass transition temperature of 180°C or higher, such as polyphenylene ether, polysulfone, polyether sulfone, polyphenylene sulfide, polyether imide, polyimide, polyamide (particularly aramid), polyamideimide, polyacrylonitrile, polyvinyl alcohol, polyether, an acrylic acid resin, or polyester.

### [Solid particles]

The electrolyte layer 10 can contain inorganic or organic solid particles.

Specific examples thereof include a metal oxide, a metal oxide hydrate, a metal hydroxide, a metal nitride, a metal carbide, and a metal sulfide formed of electrically insulating inorganic particles. Preferable examples of the metal oxide or metal oxide hydrate include aluminum oxide (alumina, Al₂O₃), boehmite (Al₂O₃H₂O or AlOOH), magnesium oxide (magnesia, MgO), titanium oxide (titania, TiO₂), zirconium oxide (zirconia, ZrO₂), silicon oxide (silica, SiO₂), yttrium oxide (yttria, Y₂O₃), and zinc oxide (ZnO) . Preferable examples of the metal nitride include silicon nitride (Si₃N₄), aluminumnitride (AlN), boron nitride (BN), and titanium nitride (TiN). Preferable examples of the metal carbide include silicon carbide (SiC) and boron carbide (B₄C). Preferable examples of the metal sulfide include a sulfate compound such as barium sulfate (BaSO₄). Preferable examples of the metal hydroxide include aluminum hydroxide (Al(OH)₃). A mineral such as a silicate, barium titanate (BaTiO₃), or strontium titanate (SrTiO₃) may be used.

Furthermore, a lithium compound such as Li₂O₄, Li₃PO₄, or LiF may be used. A carbon material such as graphite, carbon nanotube, or diamond may be used. Among these compounds, alumina, boehmite, talc, titania (particularly, titania having a rutile type structure), silica, magnesia, or a silicate mineral is preferably used, and alumina, boehmite, or a silicate mineral is more preferably used.

These inorganic particles may be used singly or in mixture of two or more kinds thereof. The inorganic particles also have oxidation resistance. In a case where the electrolyte layer 10 is provided between the positive electrode 7 and the separator 9, the electrolyte layer 10 has strong resistance also to an oxidizing environment in the vicinity of the positive electrode during charging. The shape of each of the inorganic particles is not particularly limited, and any one of spherical, fibrous, needle-like, scale-like, plate-like, random shapes, and the like can be used.

Examples of a material constituting the organic particles include: a fluorine-containing resin such as polyvinylidene fluoride or polytetrafluoroethylene; a fluorine-containing rubber such as a vinylidene fluoride-tetrafluoroethylene copolymer or an ethylene-tetrafluoroethylene copolymer; a rubber such as a styrene-butadiene copolymer or a hydride thereof, an acrylonitrile-butadiene copolymer or a hydride thereof, an acrylonitrile-butadiene-styrene copolymer or a hydride thereof, a methacrylate-acrylate copolymer, a styrene-acrylate copolymer, an acrylonitrile-acrylate copolymer, ethylene propylene rubber, polyvinyl alcohol, or polyvinyl acetate; a cellulose derivative such as ethyl cellulose, methyl cellulose, hydroxyethyl cellulose, or carboxymethyl cellulose; and a resin having at least one of a melting point and a glass transition temperature of 180°C or higher, such as polyphenylene ether, polysulfone, polyether sulfone, polyphenylene sulfide, polyether imide, polyimide, polyamide (aramid) such as wholly aromatic polyamide, polyamideimide, polyacrylonitrile, polyvinyl alcohol, polyether, an acrylic acid resin, or polyester. These materials may be used singly or in mixture of two or more kinds thereof. The shape of each of the organic particles is not particularly limited, and any one of spherical, fibrous, needle-like, scale-like, plate-like, random shapes, and the like can be used.

In the particles, an average particle diameter of primary particles is preferably 1.0 µm or less, and more preferably 0.3 µm or more and 0.8 µm or less. In addition, primary particles having an average particle diameter of 1.0 µm or more and 10 µm or less, a particle group in which primary particles are not dispersed, primary particles having an average particle diameter of 0.01 µm or more and 0.10 µm or less, or the like may be combined with primary particles having an average particle diameter of 0.3 µm or more and 0.8 µm.

### (1-2) Method for manufacturing nonaqueous electrolyte battery

The nonaqueous electrolyte battery 1 canbe manufactured according to the following first and second examples, for example.

### (First example of method for manufacturing nonaqueous electrolyte battery)

### [Method for manufacturing positive electrode]

A positive electrode active material, a conductive agent, and a binder are mixed to prepare a positive electrode mixture, and this positive electrode mixture is dispersed in a solvent such as N-methyl-2-pyrrolidone to manufacture a paste-like positive electrode mixture slurry. Subsequently, this positive electrode mixture slurry is applied onto the positive electrode current collector 7A, the solvent is dried, and compression molding is performed with a roll press machine or the like to form the positive electrode active material layer 7B. The positive electrode 7 is thereby manufactured.

### [Method for manufacturing negative electrode]

A negative electrode active material and a binder are mixed to prepare a negative electrode mixture, and this negative electrode mixture is dispersed in a solvent such as N-methyl-2-pyrrolidone to manufacture a paste-like negative electrode mixture slurry. Subsequently, this negative electrode mixture slurry is applied onto the negative electrode current collector 8A, the solvent is dried, and compression molding is performed with a roll press machine or the like to form the negative electrode active material layer 8B. The negative electrode 8 is thereby manufactured.

### [Preparation of nonaqueous electrolytic solution]

The nonaqueous electrolytic solution is prepared by dissolving an electrolyte salt in a nonaqueous solvent.

### [Assembly of nonaqueous electrolyte battery]

A precursor solution containing a nonaqueous electrolytic solution, a resin material, inorganic particles, and a mixed solvent is applied onto both surfaces of each of the positive electrode 7 and the negative electrode 8, and the mixed solvent is volatilized to form the electrolyte layer 10. Thereafter, the positive electrode lead 2 is attached to an end of the positive electrode current collector 7A by welding, and the negative electrode lead 3 is attached to an end of the negative electrode current collector 8A by welding.

Subsequently, the positive electrode 7 and the negative electrode 8 on which the electrolyte layers 10 have been formed are laminated through the separator 9 to obtain a laminate. Thereafter, this laminate is wound in a longitudinal direction thereof, and the protective tape 11 is bonded to an outermost peripheral portion thereof to form the wound electrode body 4.

Note that the wound electrode body 4 may be formed as follows. A precursor solution is applied onto least one surface of the separator 9, and then a mixed solvent is volatilized. The electrolyte layer 10 is thereby formed on at least one surface of the separator 9. Note that, in advance, the positive electrode lead 2 is attached to an end of the positive electrode current collector 7A by welding and the negative electrode lead 3 is attached to an end of the negative electrode current collector 8A by welding. The positive electrode 7 and the negative electrode 8 are laminated through the separator 9 having the electrolyte layers 10 formed on both surfaces thereof to form a laminate, and then this laminate is wound in a longitudinal direction thereof to obtain the wound electrode body 4.

Finally, for example, the wound electrode body 4 is inserted into the exterior member 5, and outer peripheral portions of the exterior member 5 are in close contact with each other by thermal fusion or the like for sealing. At this time, the adhesive film 6 is inserted between the exterior member 5 and each of the positive electrode lead 2 and the negative electrode lead 3. The nonaqueous electrolyte battery 1 illustrated in Figs. 1 and 2 is thereby completed.

### (Second example of method for manufacturing nonaqueous electrolyte battery)

In addition, the nonaqueous electrolyte battery 1 may be manufactured by sequentially performing the following resin layer forming step, winding step, and battery assembly step.

### [Resin layer forming step]

First, a resin layer is formed on one surface or both surfaces of the separator 9. The resin layer can be formed by the following first and second examples, for example.

### [First example: manufacturing method by phase separation]

A resin material and particles to constitute a resin layer are mixed at a predetermined mass ratio, and are added to a dispersion solvent such as N-methyl-2-pyrrolidone. The resin material is dissolved therein to obtain a resin solution. Subsequently, the resin solution is applied or transferred onto at least one surface of the separator 9. Examples of an application method include an application method with a die coater.

Subsequently, the separator 9 onto which the resin solution has been applied is immersed in a water bath, and the resin solution is phase-separated to form a resin layer. The resin solution applied onto a surface of the separator is brought into contact with water or the like which is a poor solvent with respect to the resin material dissolved in the resin solution and which is a good solvent for the dispersion solvent to dissolve the resin material, and is dried with hot air finally. This makes it possible to obtain the separator 9 in which a particle-carrying resin layer formed of a resin material having a three-dimensional mesh structure is formed on a surface of the separator.

The resin layer manufactured in this manner forms a unique porous structure by using a rapid poor solvent-induced phase separation phenomenon accompanied by spinodal decomposition, caused by a poor solvent.

### Adjustment of conditions at the time of phase separation of resin solution

When the separator onto which the resin solution has been applied is immersed in a water bath to phase-separate the resin solution, ultrasonic waves are preferably applied to the bath. At this time, as the ultrasonic waves have larger energy, a resin layer after completion can be more sparse, and the electrolyte layer 10 formed by impregnating the resin layer with a nonaqueous electrolytic solution in a later step can be more sparse. Note that application of ultrasonic waves to the bath at the time of phase separation of the resin solution can make particles or particle groups formed into secondary particles dispersed independently of one another, and therefore is more preferable. Furthermore, also by adjusting the rate of phase separation, a state of a resin layer can be controlled, and a state of the electrolyte layer 10 formed by impregnating the resin layer with a nonaqueous electrolytic solution in a later step can be controlled. The rate of phase separation can be adjusted, for example, by adding a small amount of a dispersion solvent such as N-methyl-2-pyrrolidone to a solvent such as water which is a good solvent for the dispersion solvent, used at the time of phase separation. For example, as the mixing amount of N-methyl-2-pyrrolidone mixed with water is larger, the rate of phase separation is lower. In a case where phase separation is performed using only water, phase separation occurs most rapidly. As the rate of phase separation is lower, a resin layer after completion can be more sparse, and the electrolyte layer 10 formed by impregnating the resin layer with a nonaqueous electrolytic solution in a later step can be more sparse.

### [Second example : manufacturing method by drying at high temperature]

A resin material and particles to constitute a resin layer are mixed at a predetermined mass ratio, are added to a dispersion solvent such as 2-butanone (methyl ethyl ketone; MEK) or N-methyl-2-pyrrolidone (NMP), and are dissolved therein to obtain a resin solution. Subsequently, this resin solution is applied onto at least one surface of the separator 9.

Subsequently, the separator 9 onto which the resin solution has been applied is dried, for example, by causing the separator 9 to pass through a drying furnace, and the dispersion solvent is volatilized to form a resin layer. At this time, it is preferable to set the temperature during drying to a sufficiently high value for the dispersion solvent such that the dispersion solvent is vaporized and air bubbles are generated in the resin solution.

### [Winding step]

Subsequently, the positive electrode 7 and the negative electrode 8 are laminated and wound through the separator 9 having a resin layer formed on one principal surface or both principal surfaces, and the wound electrode body 4 having a wound structure is thereby manufactured.

### [Battery assembly step]

Subsequently, a recess portion is formed by deep-drawing the exterior member 5 formed of a laminate film, the wound electrode body 4 is inserted into the recess portion, an unprocessed portion of the exterior member 5 is folded back to an upper portion of the recess portion, and thermal fusion is performed except for a part (for example, one side) of an outer periphery of the recess portion. At this time, the adhesive film 6 is inserted between the exterior member 5 and each of the positive electrode lead 2 and the negative electrode lead 3.

Subsequently, a nonaqueous electrolytic solution is prepared and injected into an inside of the exterior member 5 from an unwelded portion of the exterior member 5, and then the unwelded portion of the exterior member 5 is sealed by thermal fusion or the like. At this time, by vacuum sealing, the resin layer is impregnated with the nonaqueous electrolytic solution, and at least a part of the resin material is swollen to form the electrolyte layer 10. The nonaqueous electrolyte battery 1 illustrated in Figs. 1 and 2 is thereby completed.

### (1-3) Another example of laminate film type nonaqueous electrolyte battery

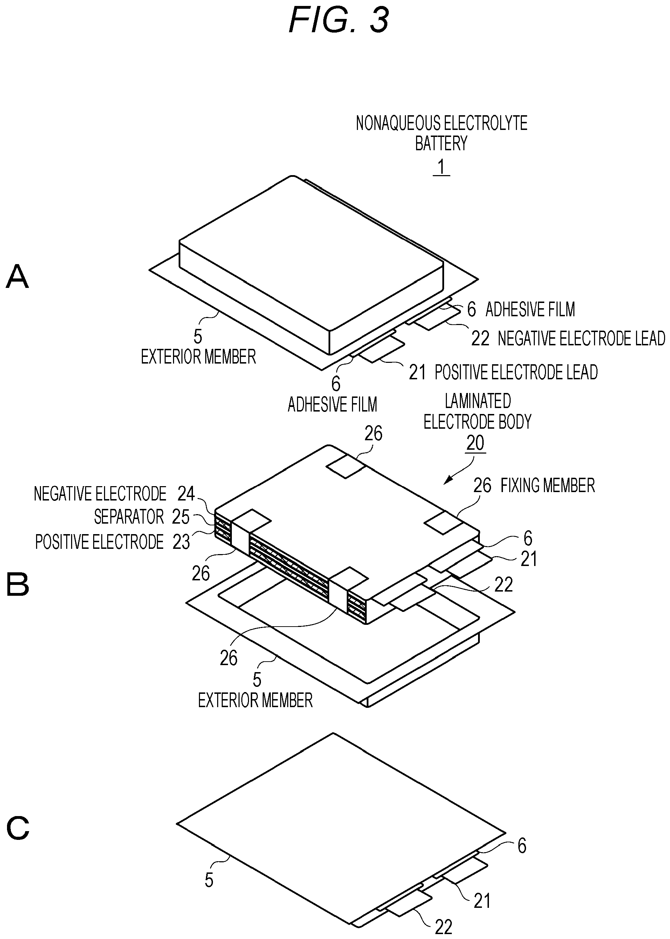

In the above examples, the nonaqueous electrolyte battery 1 in which the wound electrode body 4 is sheathed with the exterior member 5 has been described. However, as illustrated in Figs. 3A to 3C, a laminated electrode body 20 may be used in place of the wound electrode body 4. Fig. 3A is an external view of the nonaqueous electrolyte battery 1 housing the laminated electrode body 20. Fig. 3B isanexploded perspective view illustrating how the laminated electrode body 20 is housed in the exterior member 5.

As the laminated electrode body 20, the laminated electrode body 20 obtained by laminating rectangular positive electrode 23 and negative electrode 24 through a separator 25 and fixing the resulting laminate with a fixing member 26 is used. From the laminated electrode body 20, a positive electrode lead 21 connected to the positive electrode 23 and a negative electrode lead 22 connected to the negative electrode 24 are led out, and the adhesive film 6 is provided between the exterior member 5 and each of the positive electrode lead 21 and the negative electrode lead 22.

Note that a method for forming the electrolyte layer 10, a method for injecting a nonaqueous electrolytic solution, and a method for thermally fusing the exterior member 5 are similar to those in a case of using the wound electrode body 4 described in (1-2).

### <2. One embodiment>

As described above, as a method for charging a lithium ion secondary battery including a positive electrode, a negative electrode, an electrolytic solution or a gel-like electrolyte containing an electrolytic solution and a resin material for holding the electrolytic solution, and a laminate film exterior body housing these, a combination of constant-current charging and constant-voltage charging (constant-current constant-voltage method) is known.

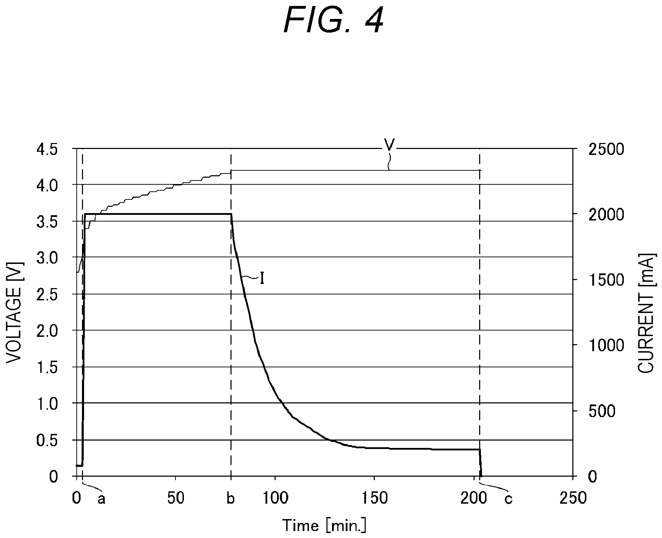

The (constant-current constant-voltage method) will be described with reference to Fig. 4. The horizontal axis represents charging time, and the vertical axis represents a cell voltage and a charging current. The region (a-b) is a range of constant-current charging, and the region (b-c) is a range of constant-voltage charging. The arrow I in Fig. 4 indicates a charging current and the arrow V indicates a cell voltage. A power supply unit for charging performs operation for constant-current control in the region (a-b), and performs operation for constant-voltage control in the region (b-c). As illustrated in Fig. 4, initially, constant-current charging is performed with a predetermined current value, and a cell voltage rises. When charging progresses and the cell voltage reaches a predetermined voltage value, charging is switched from constant-current charging to constant-voltage charging. In a period of the constant-voltage charging, a charging current gradually decreases, and the cell voltage rises toward an output voltage of the power supply unit. Then, when the charging current becomes smaller than a predetermined value, charging is completed.

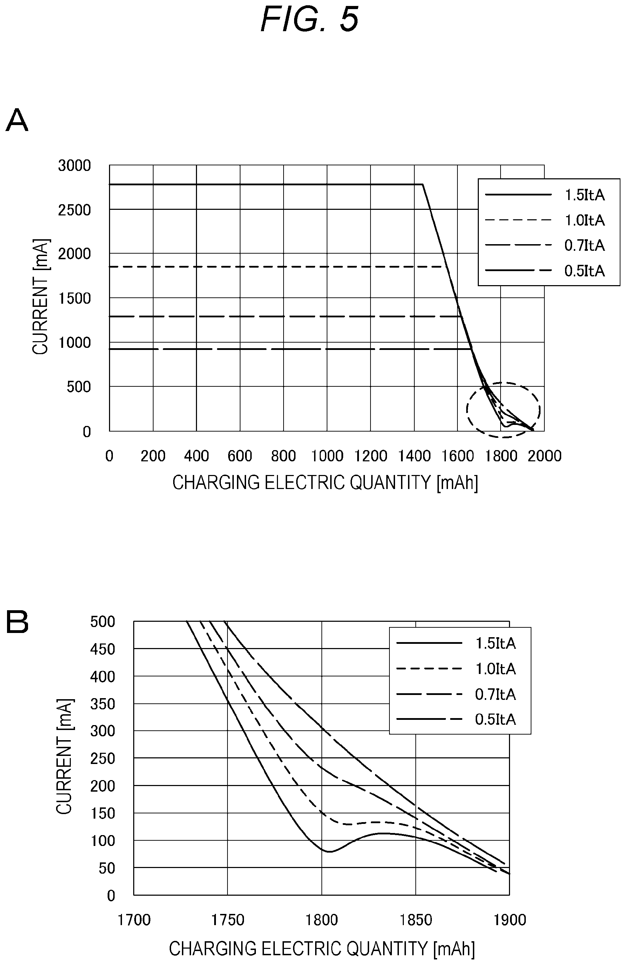

Fig. 5A is a graph obtained by plotting a charging current with respect to the charging electric quantity in a constant-voltage charging section of constant-voltage constant-current charging. Fig. 5A illustrates a change of each of a plurality of current values (1.5 ItA, 1.0 ItA, 0.7 ItA, and 0.5 ItA). Fig. 5B is an enlarged view of a region where a value of the charging current is small in Fig. 5A. As illustrated in the enlarged view of Fig. 5B, in the curve of the charging current, an inflection point appears except in a case where the current value is 0.5 ItA. Note that ItA = rated capacity (Ah)/1 (h) is satisfied.

The inflection point of the charging current is a point at which a sign of a change ratio (value calculated by second-order differentiation) of a slope (value obtained by first-order differentiation) of a tangent of the curve of the charging current changes. In other words, the inflection point is a point at which the curve changes from an upwardly protruding state to an upwardly recessed state, or a point at which the curve changes from an upwardly recessed state to an upwardly protruding state. In the example of Fig. 5B, there is a point (inflection point) at which the curve of the charging current changes from an upwardly recessed state to an upwardly protruding state. The inflection point can be detected by second-order differentiation of the curve of the charging current with respect to the charging electric quantity . An inflection point may be detected by second-order differentiation of a curve of a change of a charging current with respect to time.

As a result of studies by the inventors of the present application, it has been found that degradation is large in a case where a current value indicates an inflection point in the graph (Fig. 5) obtained by plotting the charging current with respect to the charging electric quantity in the constant-voltage charging section of constant-voltage constant-current charging of a lithium ion secondary battery. A cause why this inflection point is generated is not completely clear. However, it has been found that a small amount of lithium is precipitated on a negative electrode in some cases during charging in which such an inflection point is observed. Furthermore, the inventors of the present application have found that presence or absence of this inflection point varies and the degree of degradation varies depending on a charging current or an environmental temperature. That is, precipitation of lithium is deteriorated as the temperature during charging decreases, and is deteriorated as the charging current increases.

Precipitation of lithium has a bad influence on lifetime of a lithium ion secondary battery, and lithium is precipitated more easily as an environmental temperature during charging is lower and the charging current is larger. Therefore, when charging current abnormality (inflection point) is detected, it is necessary to adjust conditions for next and subsequent charging depending on the temperature.

In the present technology, a value obtained by second-order differentiation of a charging current in a constant-voltage charging section with respect to a charging electric quantity is calculated during charging, and in a case where a change in a sign of the calculated value from positive to negative or from negative to positive is observed (that is, in a case where an inflection point is detected), only if an ambient temperature immediately before start of next and subsequent charging is T or lower, the whole or a part of a current in a constant-current charging current section is reduced to a value of 80% or less and 40% or more of an initial setting.

Furthermore, according to the present technology, the phrase "immediately before start of charging" means that it is necessary to perform no charging between the time point of temperature measurement and the time point of starting to energize a charging current. A range of 0.1 seconds or more and 1 hour or less before energizing a charging current is preferable, and a range of 0.1 seconds or more and 1 minute or less is more preferable. A case outside this range may make an ambient temperature fluctuate, and may impair an effect of the present technology.

In the constant-voltage charging process according to the present technology, a value calculated by second-order differentiation is determined in a period in which a charging current value attenuates from 100% at the time of start of constant-voltage charging to 10%. In constant-current constant-voltage charging, first, charging starts at a constant current. When a battery voltage reaches a set voltage, charging is switched to constant-voltage charging, and at the same time, the current decreases from a current value in the constant-current charging. 100% means a current ratio while a current value in constant-current charging is 100%, and a current ratio can be determined by (constant-voltage charging current/constant-current charging current × 100). At a stage where this value is lower than 10%, variation and fluctuation in energizing current may occur due to various environmental factors and the like. In order to prevent a value obtained by second-order differentiation of a charging current with respect to charging electric quantity from largely varying and to prevent judgment with a differential value from being unstable in the present technology, this stage is preferably excluded from a region to be judged.

In the present technology, a ratio of decreasing a current value in constant-current charging is 80% to 40%. If the ratio is more than 80%, an effect of prolonging lifetime is lost unfavorably. If the ratio is less than 40%, charging time is too long unfavorably. Furthermore, the ratio is preferably 80% or less and 60% or more.

Note that a circuit and a device for performing the constant-current charging and constant-voltage charging methods according to the present technology are not particularly limited, and a constant-current/constant-voltage charging device generally widely used can be used as it is. Furthermore, a method and an apparatus for measuring an ambient temperature of the battery, the charging electric quantity, and the charging voltage according to the present technology are not particularly limited, and a device and a measuring method generally widely used can be used as they are.

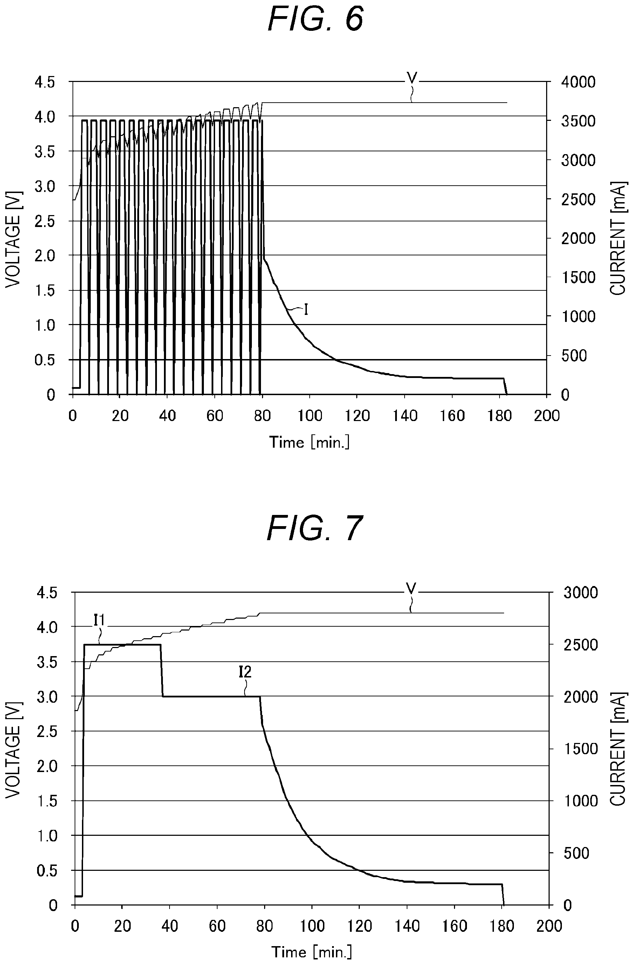

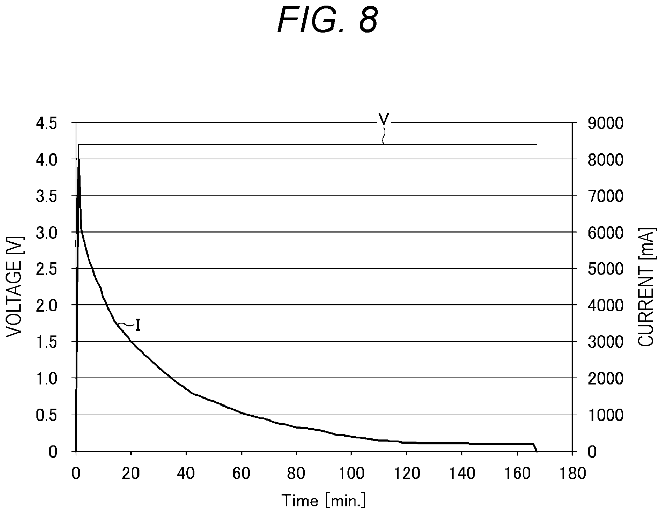

Furthermore, in the present technology, a similar effect can be obtained by applying the present technology to a charging method other than the constant-current constant-voltage method. For example, as illustrated in Fig. 6, the present technology can also be applied to a pulse charging method for intermitting a charging current. Furthermore, as illustrated in Fig. 7, the present technology can also be applied to a step charging method for switching a charging current from I1 to 12 (<I1) in a constant-current charging section. Furthermore, in the present technology, as illustrated in Fig. 8, the present technology can also be applied to a constant-voltage charging method for applying a constant voltage from an initial charging stage.

### [EXAMPLES]

Hereinafter, an embodiment of the present technology will be described in detail on the basis of Examples. Note that the present technology is not limited to the configurations of the following Examples.

### <Example A>

### <Preparation of battery>

### [Manufacture of positive electrode]

97% by mass of lithium cobaltite (LiCoO₂) as a positive electrode active material, 1% by mass of carbon black as a conductive agent, and 2% by mass of polyvinylidene fluoride (PVdF) as a binder were mixed to prepare a positive electrode mixture, and this positive electrode mixture was dispersed in N-methyl-2-pyrrolidone (NMP) as a dispersion medium to obtain a positive electrode mixture slurry. This positive electrode mixture slurry was applied onto both surfaces of a positive electrode current collector formed of a strip-shaped aluminum foil having a thickness of 12 µm such that a part of the positive electrode current collector was exposed. Thereafter, the dispersion medium of the applied positive electrode mixture slurry was evaporated and dried, and compression molding was performed with a roll press to form a positive electrode active material layer. Finally, a positive electrode terminal was attached to the exposed port ion of the positive electrode current collector to form a positive electrode.

### [Manufacture of negative electrode]

96% by mass of granular graphite powder having an average particle diameter of 20 µm as a negative electrode active material and 4% by mass of PVdF as a binder were used as a negative electrode mixture. An appropriate amount of water was further added thereto, and the resulting mixture was stirred to prepare a negative electrode mixture slurry. This negative electrode mixture slurry was applied onto both surfaces of a negative electrode current collector formed of a strip-shaped copper foil having a thickness of 10 µm such that a part of the negative electrode current collector was exposed. Thereafter, the dispersion medium of the applied negative electrode mixture slurry was evaporated and dried, and compression molding was performed with a roll press to form a negative electrode active material layer. Finally, a negative electrode terminal was attached to the exposed portion of the negative electrode current collector to form a negative electrode.

### [Formation of electrolyte layer]

Lithium hexafluorophosphate (LiPF₆)as an electrolyte salt was dissolved at a concentration of 1 mol/dm³ in a nonaqueous solvent prepared by mixing ethylene carbonate (EC), propylene carbonate (PC), succinonitrile, and vinylene carbonate (VC) at a mass ratio of 50: 49: 0.5: 0.5 to prepare a nonaqueous electrolytic solution.

Subsequently, using polyvinylidene fluoride (PVdF) as a polymer compound (resin material) for holding the nonaqueous electrolytic solution, the nonaqueous electrolytic solution, polyvinylidene fluoride, dimethyl carbonate (DMC), and boehmite particles were mixed to prepare a sol-like precursor solution.

Subsequently, the precursor solution was applied onto both surfaces of each of the positive electrode and the negative electrode, and was dried to remove a plasticizer. A gel electrolyte layer was thereby formed on the surfaces of the positive electrode and the negative electrode.

### [Assembly of laminate film type battery]

The positive electrode and the negative electrode each having electrolyte layers formed on both surfaces thereof and a separator were laminated in order of the positive electrode, the separator, the negative electrode, and the separator, and were wound in a flat shape many times in a longitudinal direction . Thereafter, a winding end portion was fixed with an adhesive tape to form a wound electrode body.

Subsequently, the wound electrode body was sheathed with a laminate film having a soft aluminum layer. Lead-out sides of the positive electrode terminal and the negative electrode terminal around the wound electrode body were thermally fused to the other two sides under reduced pressure for sealing and closing. With this arrangement, a laminate film type battery having a battery shape of 37 mm in thickness, 49 mm in width, 81 mm in height (374981 size), and a battery capacity of 2000 mAh was manufactured.

A charge/discharge test was performed in the following Comparative Examples and Examples, and evaluation was performed. Table 1 illustrates results thereof.

**[Table 1]**

| Example A | | Experimental conditions: temperature pattern of cycle | | | | | | | | | | Inflection appearance cycle Inflection appearance temperature | Capacity retention ratio after cycles | Average charging time per cycle |
|---|---|---|---|---|---|---|---|---|---|---|---|---|---|---|
| Number of cycle | | 2-100 | 101-200 | 201-300 | 301-400 | 401-500 | 501-600 | 601-700 | 701-800 | 801-900 | 901-1000 | | | |
| Environmental temperature | | 25°C | 25°C | 25°C | 25°C | 25°C | 25°C | 25°C | 25°C | 25°C | 25°C | | | |
| | CC current value (mA) | 2000 | 2000 | 2000 | 2000 | 2000 | 2000 | 2000 | 2000 | 2000 | 2000 | 745^{th} cycle | 64% | 1 hour 30 minutes |
| Comparative Example 1A | presence or absence of inflection | Absence | Absence | Absence | Absence | Absence | Absence | Absence | Presence after 745^{th} cycle | Presence | Presence | 25°C | | |
| | CC current value (mA) | 1500 | 1500 | 1500 | 1500 | 1500 | 1500 | 1500 | 1500 | 1500 | 1500 | 863^{rd} cycle | 87% | 1 hour 59 minutes |
| Comparative Example 2A | Presence or absence of inflection | Absence | Absence | Absence | Absence | Absence | Absence | Absence | Absence | Presence after 863^{th} cycle | Presence | 25°C | | |
| | CC current value (mA) | 2000 | 2000 | 2000 | 2000 | 2000 | 2000 | 2000 | 2000→ | 1800 | 1800 | 740^{th} cycle | 68% | 1 hour 32 minutes |
| Comparative Example 3A | Presence or absence of inflection | Absence | Absence | Absence | Absence | Absence | Absence | Absence | 1600 after 741^{st} cycle Presence only in 740^{th} to 754^{th} cycle | Presence | Presence | 25°C | | |
| | CC current value (mA) | 2000 | 2000 | 2000 | 2000 | 2000 | 2000 | 2000 | 2000→ | 1600 | 1600 | 746^{th} cycle | 85% | 1 hour 36 minutes |
| Example 1A | Presence or absence of inflection | Absence | Absence | Absence | Absence | Absence | Absence | Absence | 1600 after 747^{th} cycle Presence only in 746^{th} to 759^{th} cycle | Absence | Absence | 25°C | | |
| | CC current value (mA) | 2000 | 2000 | 2000 | 2000 | 2000 | 2000 | 2000 | 2000→ | 800 | 800 | 740^{th} cycle | 91% | 1 hour 43 minutes |
| Example 5A | Presence or absence of inflection | Absence | Absence | Absence | Absence | Absence | Absence | Absence | 600 after 741^{st} cycle Presence only in 740^{th} to 745^{th} cycle | Absence | Absence | 25°C | | |
| | CC current value (mA) | 2000 | 2000 | 2000 | 2000 | 2000 | 2000 | 2000 | 2000→ | 12000 | 1200 | 744^{th} cycle | 88% | 1 hour 39 minutes |
| Example 6A | Presence or absence of inflection | Absence | Absence | Absence | Absence | Absence | Absence | Absence | 600 after 745^{th} cycle Presence only in 744^{th} to 754^{th} cycle | Absence | Absence | 25°C | | |
| | CC current value (mA) | 2000 | 2000 | 2000 | 2000 | 2000 | 2000 | 2000 | 2000→ | 1600 only after charge of 600 mAh | 1600 only after charge of 600 mAh | 741^{st} cycle | 85% | 1 hour 35 minutes |
| Example 7A | Presence or absence of inflection | Absence | Absence | Absence | Absence | Absence | Absence | Absence | 1600 after 741^{st} cycle and only after charge of 600 mAh | Absence | Absence | 25°C | | |

| Environmental temperature | | 15°C | 15°C | 15°C | 15°C | 15°C | 15°C | 15°C | 15°C | 15°C | 15°C | | | |
|---|---|---|---|---|---|---|---|---|---|---|---|---|---|---|
| Comparative Example 4A | CC current value (mA) | 2000 | 2000 | 2000 | 2000 | 2000 | 2000 | 2000 | 2000 | 2000 | 2000 | 480^{th} cycle | 52% | 1 hour 40 minutes |
| | Presence or absence of inflection | Absence | Absence | Absence | Absence | Presence after 480^{th} cycle | Presence | Presence | Presence | Presence | Presence | 15°C | | |
| Example 2A | CC current value (mA) | 2000 | 2000 | 2000 | 2000 | 2000→ 1600 after 483^{rd} cycle | 1600 | 1600 | 1600 | 1600 | 1600 | 482^{nd} cycle | 83% | 1 hour 52 minutes |
| | Presence or absence of inflection | Absence | Absence | Absence | Absence | Presence only in 482^{nd} to 495^{th} cycle | Absence | Absence | Absence | Absence | Absence | 15°C | | |
| Environmental temperature | | 15°C | 25°C | 35°C | 45°C | 15°C | 25°C | 35°C | 45°C | 15°C | 25°C | | | |
| Comparative Example 6A | CC current value (mA) Presence or absence of inflection | 2000 Absence | 2000 Absence | 2000 Absence | 2000 Absence | 2000 Absence | 2000 Presence after 573^{rd} cycle | 2000 Presence | 2000 Absence | 2000 Presence | 2000 Presence | 573^{rd} cycle 25°C | 42% | 1 hour 31 minutes |
| Example 3A | CC current value (mA) | 2000 | 2000 | 2000 | 2000 | 2000 | 2000→ 1600 after 571^{st} cycle | 2000 | 2000 | 1600 | 1600 | 570^{th} cycle | 81% | 1 hour 42 minutes |
| | Presence or absence of inflection | Absence | Absence | Absence | Absence | Absence | Presence only in 570^{th} to 582^{nd} cycle | Absence | Absence | Absence | Absence | 25°C | | |
| Environmental temperature | | 45°C | 35°C | 25°C | 15°C | 45°C | 35°C | 25°C | 15°C | 45°C | 35°C | | | |
| Comparative Example 7A | CC current value (mA) | 2000 | 2000 | 2000 | 2000 | 2000 | 2000 | 2000 | 2000 | 2000 | 2000 | 639^{th} cycle | 44% | 1 hour 35 minutes |
| | Presence or absence of inflection | Absence | Absence | Absence | Absence | Absence | Absence | Presence after 639^{rd} cycle | Presence | Presence | Presence | 25°C | | |
| Example 4A | CC current value (mA) | 2000 | 2000 | 2000 | 2000 | 2000 | 2000 | 2060→ 1600 after 631^{st} cycle | 1600 | 2000 | 2000 | 630^{th} cycle | 80% | 1 hour 32 minutes |
| | Presence or absence of inflection | Absence | Absence | Absence | Absence | Absence | Absence | Presence only in 630^{th} to 644^{th} cycle | Absence | Absence | Absence | 25°C | | |

### <Comparative Example 1A>

An ambient temperature of the above-described cell was measured immediately before start of charging under conditions indicated in Table 1 with a thermostatic chamber at 23°C. Thereafter, the above-described cell was subjected to constant-current constant-voltage charging at (2000 mA-4.35 V), and charging was terminated at a stage where a charging current decreased to 100 mA. After pausing for 30 minutes, constant-current discharging was performed at 2000 mA, discharging was terminated at a battery voltage of 3 V, and an initial capacity was determined.

Subsequently, after pausing for 30 minutes, charging and discharging were repeated 100 times under the same conditions as described above under the temperature conditions (environmental temperature 25°C) in Table 1. During constant-current constant-voltage charging, a current amount and an integrated charging electric quantity were measured once every 10 seconds, and a value obtained by second-order differentiation of the current value with respect to the integrated charging electric quantity was obtained. In order to avoid noise, in a case where a positive/negative sign of this value changed and switching of the positive/negative sign was maintained continuously for 10 measurement points, it was defined that a current inflection point was observed, and the number of cycle at which the current inflection point had been observed first was recorded as [inflection appearance cycle].

Charging and discharging were each further similarly repeated 100 times in the same thermostatic chamber under the temperature and charging current conditions indicated in Table 1, and were terminated at the total number of cycles of 1000. At the 1001st cycle, charge/discharge was performed at 23°C under the same conditions as described above, and the obtained capacity was divided by an initial capacity to be used as a capacity retention ratio after the cycles. Furthermore, average charging time per cycle was recorded.

### <Comparative Example 2A>

Charging was performed for Comparative Example 1A while a charging current was constant at 75% (1500 mA).

### <Comparative Example 3A>

For Comparative Example 1A, a charging current was switched from 100% (2000mA) to 90% (1800mA) after an inflection point was detected.

### <Comparative Example 4A>

The temperature condition was set to (environmental temperature 15°C) for Comparative Example 1A. A charging current was constant at 2000 mA.

### <Example 1A>

In a similar manner to the above-described Comparative Example 1A, a cycle test was performed with the temperature of a thermostatic chamber and a charging current indicated in Table 1. However, regarding charging after a current inflection point was observed, in Comparative Example 3A, the current value of constant-current charging was limited to 90% (1800 mA). Meanwhile, in Example 1A, the current value was limited to 80% (1600 mA).

### <Example 2A>

An environmental temperature was set to 15°C in a similar manner to Comparative Example 4A. For Comparative Example 4A, a charging current was switched from 100% (2000 mA) to 40% (800 mA) after an inflection point was detected.

### <Example 5A>

In a similar manner to the above-described Comparative Example 1A, a cycle test was performed with the temperature of a thermostatic chamber and a charging current indicated in Table 1. However, regarding charging after a current inflection point was observed, the charging current was switched from 100% (2000 mA) to 40% (800 mA) in Example 5A.

### <Example 6A>

In a similar manner to the above-described Comparative Example 1A, a cycle test was performed with the temperature of a thermostatic chamber and a charging current indicated in Table 1. However, regarding charging after a current inflection point was observed, in Example 6A, the charging current was switched from 100% (2000 mA) to 60% (1200 mA).

### <Example 7A>

Charging was performed in a similar manner to Example 1A. However, regarding charging after a current inflection point was observed, in Example 1A, the current value of constant-current charging was limited to 80% (1600 mA) in the entire region. Meanwhile, in Example 7A, charging was performed at 2000 mAh until charging of 600 mAh corresponding to 30% of the initial capacity of 2000 mAh was performed, and charging was performed at 1600 mA for a constant-current charging amount exceeding 600 mAh of the charging electric quantity.

In Example 7, when the initial fully charged amount of a battery is 100%, only in a part corresponding to a charging electric quantity after 30% of the initial fully charged amount in the constant-current charging section, a constant-current charging current is reduced.

### <Comparative Example 6A>

Temperature conditions were varied for Comparative Example 1A. That is, raising an environmental temperature in order of (15°C-25°C-35°C-45°C) every 100 cycles of charge/discharge was repeated. A charging current was constant at 2000 mA.

In the present technology, when an environmental temperature immediately before start of charging is T, regarding charging after a current inflection point is observed, only if an ambient temperature immediately before start of next and subsequent charging is T or lower, the whole or a part of a current in a constant-current charging current section is reduced to a value of 80% or less and 40% or more of an initial setting. Therefore, in a case where the environmental temperature rises, the charging current is caused not to be reduced.

### <Example 3A>

The temperature conditions were varied in a similar manner to Comparative Example 6A. Regarding charging after a current inflection point was observed, only in a case where the environmental temperature dropped, the charging current was switched from2000 mA to 1600 mA corresponding to 80% thereof. For example, after the charging current was switched to 1600 mA, in a case where the environmental temperature rose from 25°C to 35°C, the charging current was returned to 2000 mA.

### <Comparative Example 7A>

Temperature conditions were varied for Comparative Example 1A. That is, decreasing an environmental temperature in order of (45°C-35°C-25°C-15°C) every 100 cycles of charge/discharge was repeated. A charging current was constant at 2000 mA.

### <Example 4A>

The temperature conditions were varied in a similar manner to Comparative Example 7A. Regarding charging after a current inflection point was observed, only in a case where the environmental temperature dropped, the charging current was switched from 2000 mA to 1600 mA corresponding to 80% thereof . For example, in a case where the environmental temperature was 25°C, after the charging current was switched to 1600 mA, even when the environmental temperature became 15°C, the charging current was maintained at 1600 mA. Then, in a case where the environmental temperature rose from 15°C to 45°C, the charging current was returned to 2000 mA.

As indicated in Table 1, in the present technology, the average charging time does not become too long, and the value of capacity retention ratio after the cycles can be good. That is, compared with Comparative Examples 1A and 3A, Examples 1A, 5A, 6A, and 7A can have good capacity retention ratios. Comparative Example 2A has a good capacity retention ratio, but has long charging time disadvantageously because the charging current is constant at 75% (1500 mA).

### <Example B>

### <Preparation of battery>

### [Manufacture of positive electrode]

97% by mass of lithium cobalt nickel manganate (LiNi_{0.5}Co_{0.2}Mn_{0.3}O₂) as a positive electrode active material, 1% by mass of carbon black as a conductive agent, and 2% by mass of polyvinylidene fluoride (PVdF) as a binder were mixed to prepare a positive electrode mixture, and this positive electrode mixture was dispersed in N-methyl-2-pyrrolidone (NMP) as a dispersion medium to obtain a positive electrode mixture slurry. This positive electrode mixture slurry was applied onto both surfaces of a positive electrode current collector formed of a strip-shaped aluminum foil having a thickness of 12 µm such that a part of the positive electrode current collector was exposed. Thereafter, the dispersion medium of the applied positive electrode mixture slurry was evaporated and dried, and compression molding was performed with a roll press to form a positive electrode active material layer. Finally, a positive electrode terminal was attached to the exposed portion of the positive electrode current collector to form a positive electrode.

### [Manufacture of negative electrode]

95% by mass of granular graphite powder having an average particle diameter of 20 µm as a negative electrode active material, 1.5% by mass of an acrylic acid modified product of a styrene-butadiene copolymer as a binder, 2% by mass of fine particles of polyvinylidene fluoride (PVdF) having a particle diameter of 0.3 µm, and 1.5% by mass of carboxymethyl cellulose as a thickener were mixed to prepare a negative electrode mixture. An appropriate amount of water was further added thereto, and the resulting mixture was stirred to prepare a negative electrode mixture slurry. This negative electrode mixture slurry was applied onto both surfaces of a negative electrode current collector formed of a strip-shaped copper foil having a thickness of 15 µm such that a part of the negative electrode current collector was exposed. Thereafter, the dispersion medium of the applied negative electrode mixture slurry was evaporated and dried, and compression molding was performed with a roll press to form a negative electrode active material layer. Finally, a negative electrode terminal was attached to the exposed portion of the negative electrode current collector to form a negative electrode.

### [Formation of electrolyte layer]

Lithium hexafluorophosphate (LiPF₆)as an electrolyte salt was dissolved at a concentration of 1 mol/dm³ in a nonaqueous solvent prepared by mixing ethylene carbonate (EC), methyl ethyl carbonate (MEC), and vinylene carbonate (VC) at a mass ratio of 30: 69: 0.5: 0.5 to prepare a nonaqueous electrolytic solution.

### [Formation of separator]

An N-methylpyrrolidone solution of PVdF was applied onto a separator containing polyethylene and polypropylene and having a thickness of 12 microns. Thereafter, the resulting product was immersed in a water bath to phase-separate the PVdF solution, and was further dried with warm air.

### [Formation of laminated cell]

Subsequently, a laminated electrode body was formed by laminating a rectangular positive electrode and negative electrode, and a separator in order of the positive electrode, the separator, the negative electrode (negative electrode having PVdF layers formed on both surfaces thereof), and the separator to form a laminated electrode body.

Subsequently, the laminated electrode body was sheathed with a laminate film having a soft aluminum layer. Lead-out sides of the positive electrode terminal and the negative electrode terminal around the laminated electrode body were thermally fused to the other three sides for sealing and closing. Subsequently, the cell shape was shaped by pressing.

With this arrangement, a laminate film type battery having a battery shape of 37 mm in thickness, 49 mm in width, 84 mm in height (374984 size), and a battery capacity of 2100 mAh was manufactured.

A charge/discharge test was performed in the following Comparative Examples and Examples, and evaluation was performed. Table 2 illustrates results thereof.

**[Table 2]**

| Example B | | Experimental conditions: temperature pattern of cycle | | | | | | | | | | Inflection appearance cycle Inflection appearance temperature | Capacity retention ratio after cycles | Average charging time per cycle |
|---|---|---|---|---|---|---|---|---|---|---|---|---|---|---|
| Number of cycle | | 2-100 | 101-200 | 201-300 | 301-400 | 401-500 | 501-600 | 601-700 | 701-800 | 801-900 | 901-1000 | | | |
| Environmental temperature | | 25°C | 25°C | 25°C | 25°C | 25°C | 25°C | 25°C | 25°C | 25°C | 25°C | | | |
| Comparative Example 1B | CC current value (mA) | 2100 | 2100 | 2100 | 2100 | 2100 | 2100 | 2100 | 2100 | 2100 | 2100 | 633^{rd} cycle | 42% | 1 hour 21 minutes |
| | Presence or absence of inflection | Absence | Absence | Absence | Absence | Absence | Absence | Presence after 633^{rd} cycle | presence | Presence | Presence | 25°C | | |
| Comparative Example 2B | CC current value (mA) | 1570 | 1570 | 1570 | 1570 | 1570 | 1570 | 1570 | 1570 | 1570 | 1570 | 793^{rd} cycle | 90% | 1 hour 55 minutes |
| | Presence or absence of inflection | Absence | Absence | Absence | Absence | Absence | Absence | Absence | Presence after 793^{rd} cycle | Presence | Presence | 25°C | | |
| Comparative Example 3B | CC current value (mA) | 2100 | 2100 | 2100 | 2100 | 2100 | 2100 | 2100→ 1890 after 640^{th} cycle | 1890 | 1890 | 1890 | 629^{th} cycle | 48% | 1 hour 23 minutes |
| | Presence or absence of inflection | Absence | Absence | Absence | Absence | Absence | Absence | Presence after 629^{th} cycle | presence | Presence | Presence | 25°C | | |
| Example 1B | CC current value (mA) | 2100 | 2100 | 2100 | 2100 | 2100 | 2100 | 2100→ 1680 after 636^{th} cycle | 1680 | 1680 | 1680 | 635^{th} cycle | 89% | 1 hour 24 minutes |
| | Presence or absence of inflection | Absence | Absence | Absence | Absence | Absence | Absence | Presence only in 635^{th} to 649^{th} cycle | Absence | Absence | Absence | 25°C | | |
| Example 5B | CC current value (mA) | 2100 | 2100 | 2100 | 2100 | 2100 | 2100 | 2100→ 840 after 635^{th} cycle | 840 | 840 | 840 | 634^{th} cycle | 92% | 1 hour 35 minutes |
| | Presence or absence of inflection | Absence | Absence | Absence | Absence | Absence | Absence | Presence only in 634^{th} to 648^{th} cycle | Absence | Absence | Absence | 25°C | | |
| Example 6B | CC current value (mA) | 2100 | 2100 | 2100 | 2100 | 2100 | 2100 | 2100→ 840 after 637^{th} cycle | 1260 | 1260 | 1260 | 636^{th} cycle | 91% | 1 hour 29 minutes |
| | Presence or absence of inflection | Absence | Absence | Absence | Absence | Absence | Absence | Presence only in 636^{th} to 646^{th} cycle | Absence | Absence | Absence | 25°C | | |
| Example 7B | CC current value (mA) | 2100 | 2100 | 2100 | 2100 | 2100 | 2100 | 2100→ 840 after 634^{th} cycle and only after charge of 630 mAh | 1680 only after charge of 630 mAh | 1680 only after charge of 630 mAh | 1680 only after charge of 630 mAh | 633^{rd} cycle | 88% | 1 hour 22 minutes |
| | Presence or absence of inflection | Absence | Absence | Absence | Absence | Absence | Absence | Presence only in 633^{rd} to 647^{th} cycle | Absence | Absence | Absence | 25°C | | |
| Environmental temperature | | 15°C | 25°C | 35°C | 45°C | 15°C | 25°C | 35°C | 45°C | 15°C | 25°C | | | |
| Comparative Example 4B | CC current value (mA) | 2100 | 2100 | 2100 | 2100 | 2100 | 2100 | 2100 | 2100 | 2100 | 2100 | 515^{th} cycle | 42% | 1 hour 22 minutes |
| | Presence or absence of inflection | Absence | Absence | Absence | Absence | Absence | Presence after 515^{h} cycle | Presence | Absence | Presence | Presence | 15°C | | |
| Example 3B | CC current value (mA) | 2100 | 2100 | 2100 | 2100 | 2100 | 2100→ 1680 after 516^{th} cycle | 2100 | 2100 | 1680 | 1680 | 515^{th} cycle | 85% | 1 hour 23 minutes |
| | Presence or absence of inflection | Absence | Absence | Absence | Absence | Absence | Presence only in 515^{th} to 527^{th} cycle | Absence | Absence | Absence | Absence | 25°C | | |
| Environmental temperature | | 45°C | 35°C | 25°C | 15°C | 45°C | 35°C | 25°C | 15°C | 45°C | 35°C | | | |
| Comparative Example 5B | CC current value (mA) | 2100 | 2100 | 2100 | 2100 | 2100 | 2100 | 2100 | 2100 | 2100 | 2100 | 661^{st} cycle | 40% | 1 hour 23 minutes |
| | Presence or absence of inflection | Absence | Absence | Absence | Absence | Absence | Absence | Presence after 661^{st} cycle | Presence | Absence | Presence | 25°C | | |
| Example 4B | CC current value (mA) | 2100 | 2100 | 2100 | 2100 | 2100 | 2100 | 2100→ 1680 after 661^{st} cycle | 1680 | 2100 | 2100 | 660^{th} cycle | 83% | 1 hour 21 minutes |
| | Presence or absence of inflection | Absence | Absence | Absence | Absence | Absence | Absence | Presence only in 660^{th} to 676^{th} cycle | Absence | Absence | Absence | 25°C | | |

### <Comparative Example 1B>

An ambient temperature of the above-described cell was measured immediately before start of charging under conditions indicated in Table 2 with a thermostatic chamber at 23°C. Thereafter, the above-described cell was subjected to constant-current constant-voltage charging at (2100 mA-4.2 V), and charging was terminated at a stage where a charging current decreased to 100 mA. After pausing for 30 minutes, constant-current discharging was performed at 6300 mA, discharging was terminated at a battery voltage of 3 V, and an initial capacity was determined.

Subsequently, after pausing for 30 minutes, charging and discharging were repeated under the same conditions as described above under the temperature conditions (environmental temperature 25°C) in Table 2. During constant-current constant-voltage charging, a current amount and an integrated charging electric quantity were measured once every 10 seconds, and a value obtained by second-order differentiation of the current value with respect to the integrated charging electric quantity was obtained. In order to avoid noise, in a case where a positive/negative sign of this value changed and switching of the positive/negative sign was maintained continuously for 10 measurement points, it was defined that a current inflection point was observed, and the number of cycle at which the current inflection point had been observed first was recorded as [inflection appearance cycle].

Charging and discharging were further similarly repeated in the same thermostatic chamber under the temperature and charging current conditions indicated in Table 2, and were terminated at the total number of cycles of 1000. At the 1001st cycle, charge/discharge was performed at 23°C under the same conditions as described above, and the obtained capacity was divided by an initial capacity to be used as a capacity retention ratio after the cycles. Furthermore, average charging time per cycle was recorded.

### <Comparative Example 2B>

Charging was performed for Comparative Example 1B while a charging current was constant at 75% (1570 mA).

### <Comparative Example 3B>

For Comparative Example 1B, a charging current was switched from 100% (2100mA) to 90% (1890mA) after an inflection point was detected.

### <Example 1B>

In a similar manner to the above-described Comparative Example 3B, a cycle test was performed with the temperature of a thermostatic chamber and a charging current indicated in Table 2. However, regarding charging after the current inflection point was observed, in Comparative Example 3B, the current value of constant-current charging was limited to 90% (1890 mA). Meanwhile, in Example 1B, the current value was limited to 80% (1680 mA).

### <Example 5B>

In a similar manner to the above-described Comparative Example 1B, a cycle test was performed with the temperature of a thermostatic chamber and a charging current indicated in Table 2. However, regarding charging after the current inflection point was observed, the charging current was switched from 100% (2100 mA) to 40% (840 mA).

### <Example 6B>

In a similar manner to the above-described Comparative Example 1B, a cycle test was performed with the temperature of a thermostatic chamber and a charging current indicated in Table 2. However, regarding charging after the current inflection point was observed, in a similar manner to Example 5B, the charging current was switched from 100% (2100 mA) to 60% (800 mA). Furthermore, the charging current was set to 60% (1260 mA).

### <Comparative Example 4B>

Temperature conditions were varied for Comparative Example 1B. That is, raising an environmental temperature in order of (15°C-25°C-35°C-45°C) every 100 cycles of charge/discharge was repeated. The charging current was constant at 2100 mA.

### <Example 3B>

The temperature conditions were varied in a similar manner to Comparative Example 4B. Regarding charging after a current inflection point was observed, only in a case where the environmental temperature dropped, the charging current was switched from 2100 mA to 1680 mA corresponding to 80% thereof. For example, after the charging current was switched to 1680 mA, in a case where the environmental temperature rose from 25°C to 35°C, the charging current was returned to 2100 mA.

In the present technology, when an environmental temperature immediately before start of charging is T, regarding charging after a current inflection point is observed, only if an ambient temperature immediately before start of next and subsequent charging is T or lower, the whole or a part of a current in a constant-current charging current section is reduced to a value of 80% or less and 40% or more of an initial setting. Therefore, in a case where the environmental temperature rises, the charging current is caused not to be reduced.

### <Comparative Example 5B>

Temperature conditions were varied for Comparative Example 1B. That is, decreasing an environmental temperature in order of (45°C-35°C-25°C-15°C) every 100 cycles of charge/discharge was repeated. The charging current was constant at 2100 mA.

### <Example 4B>

The temperature conditions were varied in a similar manner to Comparative Example 5B. Regarding charging after a current inflection point was observed, only in a case where the environmental temperature dropped, the charging current was switched from 2100 mA to 1680 mA corresponding to 80% thereof. For example, in a case where the environmental temperature was 25°C, after the charging current was switched to 1600 mA, even when the environmental temperature became 15°C, the charging current was maintained at 1680 mA. Then, in a case where the environmental temperature rose from 15°C to 45°C, the charging current was returned to 2100 mA.

As illustrated in Table 2, in the present technology, the average charging time does not become too long, and the value of capacity retention ratio after the cycles can be good. That is, compared with Comparative Examples 1B and 3B, Examples 1B, 5B, 6B, and 7B can have good capacity retention ratios. Comparative Example 2B has a good capacity retention ratio, but has long charging time disadvantageously because the charging current is constant at 75% (1570 mA).

### <3. Other example of charging control>

In the above-described embodiment, in a case of decreasing the charging current, the charging current is set to a preset value. However, when an environmental temperature immediately before start of charging at the previous time is Ta and an environmental temperature immediately before start of charging this time is Tb, as indicated in Table 3, the amount (ΔI) to decrease the charging current may be varied depending on a value of (Ta - Tb = ΔT). In the following table, there is a relationship of (ΔT1 < ΔT2 < ΔT3 < ΔT4), and there is a relationship of (ΔI1 < ΔI2 < ΔI3 < ΔI4).

**[Table 3]**

| | |
|---|---|
| 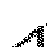 T1 | 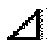 I1 |
| 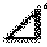 T2 | 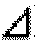 I2 |
| 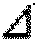 T3 | 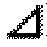 I3 |
| 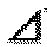 T4 | 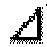 I4 |

### <4. Application example>

### "Battery pack"

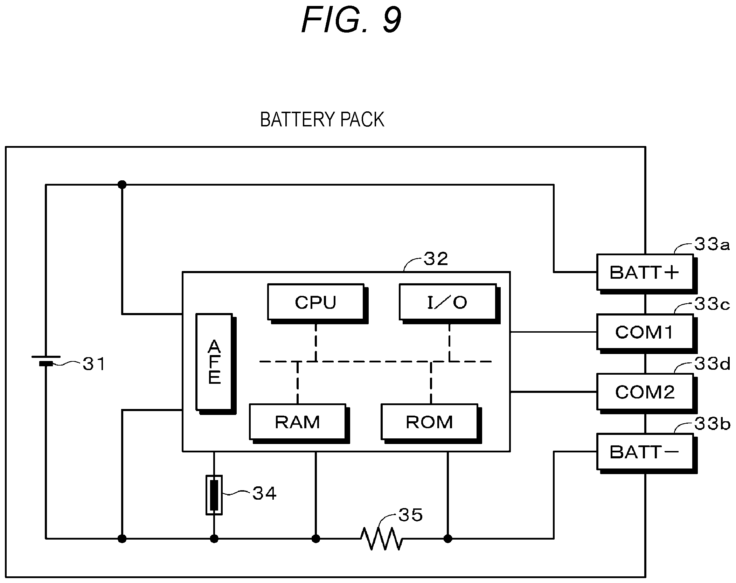

Fig. 9 is a block diagram illustrating a circuit configuration example in a case where the nonaqueous electrolyte battery of the present technology is applied to a battery pack. In the battery pack, a battery cell 31 of a secondary battery and elements related to a control unit 32 are housed in the same case. The battery cell 31 is a lithium ion secondary battery, for example. A specified charging voltage of the battery cell 31 is set to 4.35 V, for example.

The battery pack is provided with connectors 33a, 33b, 33c, and 33d for connection with an outside. The connector 33a is connected to a positive electrode of the battery cell 31, and the connector 33b is connected to a negative electrode of the battery cell 31. The connectors 33c and 33d are terminals for communication between the control unit 32 and the outside.

For example, the control unit 32 for controlling the battery pack is a microcomputer including a central processing unit (CPU), a random access memory (RAM), a read only memory (ROM), an input/output (I/O), and an analog front end (AFE) . The AFE is an analog circuit disposed between an analog signal unit and the CPU of the control unit 32. Note that a switching element for turning on/off a charging current and a switching element for turning on/off a discharging current may be provided in the battery pack, and the control unit 32 may control these switching elements.

A voltage of the battery cell 31 is supplied to the control unit 32. Furthermore, the temperature inside the battery pack is measured by a temperature detecting element, for example, a thermistor 34, and the measured temperature information is supplied to the control unit 32. Furthermore, a current flowing through a current path of the battery cell 31 is detected by a current detection resistor 35, and the detected current value is supplied to the control unit 32.

The control unit 32 controls charging operation to the battery cell 31. The control performed by the control unit 32 is performed according to a program stored in advance in a ROM. During charging, positive and negative output terminals of a charging device are connected to the connectors 33a and 33b of the battery pack, and a communication terminal of the charging device is connected to the connectors 33c and 33d. As an example, the charging device generates a charging voltage and a charging current of a predetermined value from a commercial power supply, and the charging voltage and the charging current are set by communication with the control unit 32 of the battery pack. Examples of a communication method include serial communication.

The control unit 32 performs constant-current constant-voltage charging. As described above, the control unit 32 detects an inflection point of a charging current in a constant-voltage charging section. Furthermore, the temperature immediately before start of charging at the time of the previous charging is stored in the control unit 32, and this temperature is compared with the temperature immediately before start of charging this time. In a case where the inflection point is detected and the temperature is equal to or lower than the previous temperature, a command to reduce the charging current to a value of 80% or less and 40% or more of an initial setting is transmitted to the charging device. With such control, as described above, the average charging time does not become too long, and a value of capacity retention ratio after the cycles can be good.

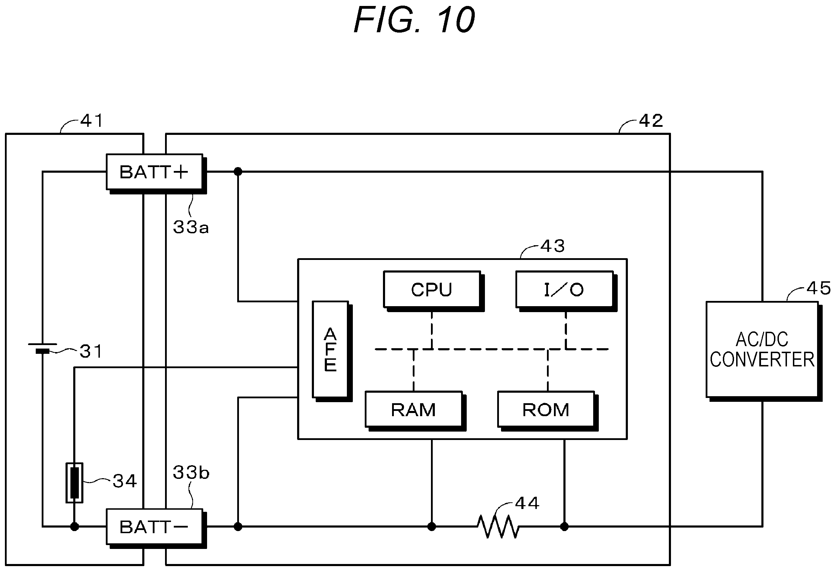

As illustrated in Fig. 10, an electronic apparatus may control charging. A battery pack 41 is provided with the battery cell 31 and the thermistor 34. An electronic apparatus 42 includes a control unit 43 and a current detection resistor 44. A DC power supply formed by an AC/DC converter 45 is used as a charging power supply. The control unit 43 of the electronic apparatus 42 performs similar control to the above-described control unit 32. A similar effect can be obtained by such a configuration.

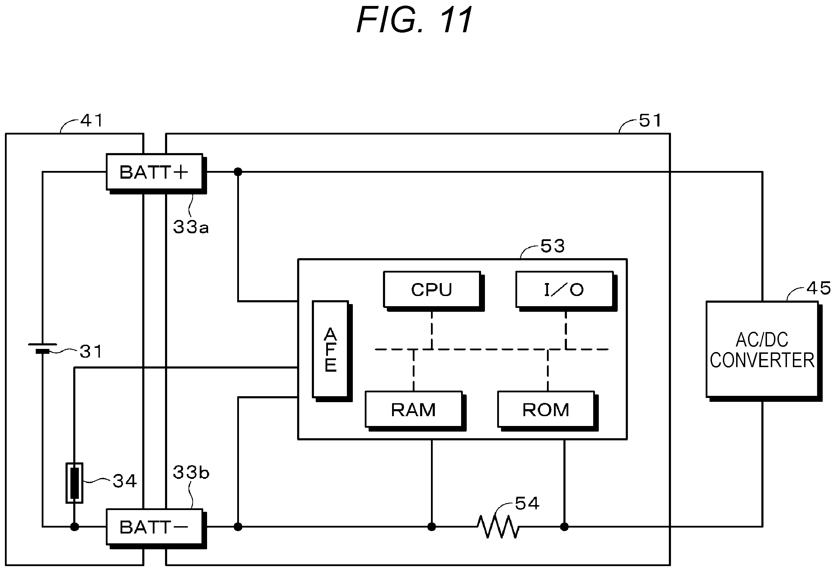

As illustrated in Fig. 11, a charging device 51 for charging the battery pack 41 can perform control. The charging device 51 includes a control unit 53 and a current detection resistor 54, and the control unit 53 of the charging device 51 performs a similar control to the control unit 32 of the above-described embodiment. A similar effect can be obtained by such a configuration.

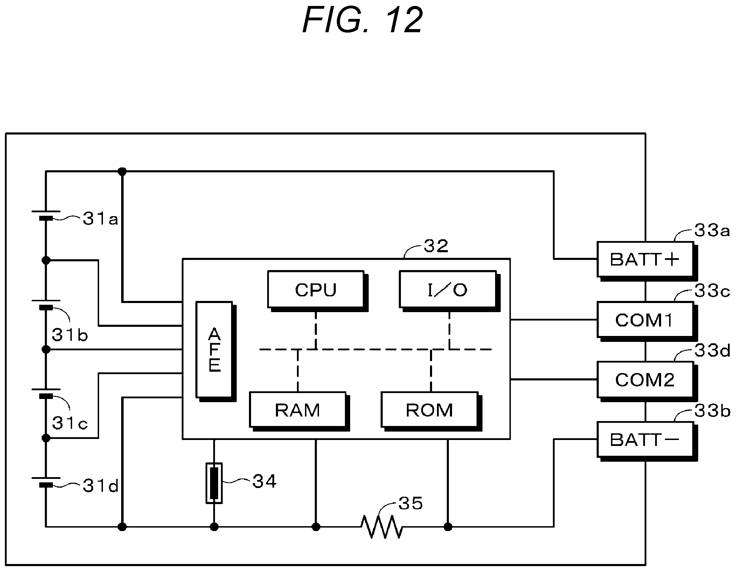

As illustrated in Fig. 12, the present technology can also be similarly applied to a battery pack including a battery in which a plurality of, for example, four battery cells 31a, 31b, 31c, and 31d are connected in series, and a similar effect can be obtained.

### "Power storage device"

The present technology can also be applied to an electricity storage module capable of generating a high voltage using a large number of battery cells . In a case where a large number of electricity storage elements, for example, battery cells, are used in order to generate a large output, a configuration is adopted in which a plurality of electricity storage modules is connected and a control device is commonly provided for the plurality of electricity storage modules. Such a configuration is referred to as a power storage device. Furthermore, a power storage system in which a plurality of power storage devices is connected is also possible. As the electricity storage element, a capacitor or the like may be used in addition to a battery.

The electricity storage module is a unit obtained by combining an electricity storage unit including a series connection of a plurality of battery cells, for example, lithium ion secondary batteries, or a series connection of parallel connections (submodules) of a plurality of battery cells, and a module controller provided for each module. A submicrocontroller unit of each module controller is connected to a main microcontroller unit of a main controller as a whole control device through a data transmission path (bus), and the main microcontroller unit is connected to the main microcontroller unit performs charging management, discharging management, and management for suppressing degradation or the like.

As the bus, a serial interface is used. Specific examples of the serial interface include an inter-integrated circuit (I2C) method, system management bus (SM bus), controller area network (CAN), and serial peripheral interface (SPI) .

As an example, communication of the I2C method is used. This method performs serial communication with a device directly connected at a relatively short distance. One master is connected to one or more slaves with two lines. On the basis of crosstalk transmitted through one line, a data signal is transferred on the other line. Each slave has an address, and the address is included in data. Data is transferred while acknowledge is sent back from a receiving side for each byte to make confirmation to each other . In a case of a power storage device, the main microcontroller unit acts as a master, and the submicrocontroller unit acts as a slave.

Data is transmitted from a submicrocontroller unit of each module controller to a main microcontroller unit. For example, information on an internal state of each electricity storage module, that is, battery information such as a voltage of each battery cell, information on a voltage of the whole module, information on a current, or information on a temperature is transmitted from a submicrocontroller unit to a main microcontroller unit. Charging processing and discharging processing of each electricity storage module are managed.

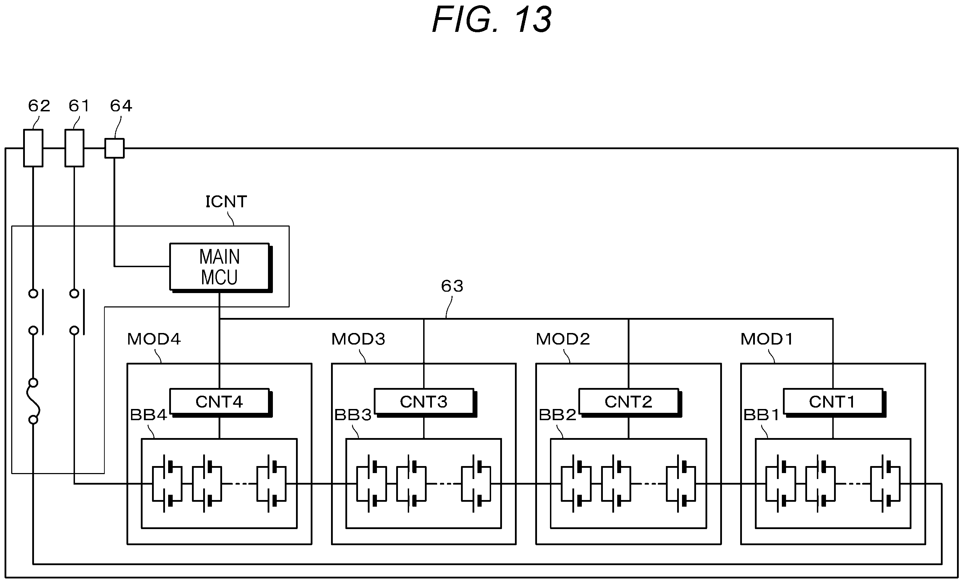

Fig. 13 illustrates an example of a specific connection configuration of the power storage device. For example, four electricity storage modules MOD1 to MOD4 are connected in series. In this case, for example, an entire output voltage of the power storage device, for example, about 200 V, is taken out to a positive electrode terminal 61 (VB+) and a negative electrode terminal 62 (VB-) . Each of the electricity storage modules MOD1 to MOD4 includes module controllers CNT1 to CNT4 and electricity storage units BB1 to BB4 in which a plurality of parallel connections of a plurality of battery cells or a plurality of submodules is connected. The electricity storage units BB1 to BB4 are connected through a power supply line.

As described later, each module controller includes a monitoring circuit, a sub control unit, and the like. A main controller ICNT is connected to the module controllers CNT1 to CNT4 through a common serial communication bus 63. Battery information such as a voltage of each module from each module controller is transmitted to the main controller ICNT. The main controller ICNT further includes a communication terminal 64 so as to be able to communicate with an outside, for example, an electronic control unit.

For example, each of the two electricity storage modules MOD1 and MOD2 and the main controller ICNT has a box-like case, and these are stacked to be used. An uninterruptable power supply (UPS) may be used as an option. The main controller ICNT is connected to the module controller CNT of each electricity storage module through the bus 63.

Furthermore, in order to control the plurality of electricity storage modules, a sub control unit of each electricity storage module is connected to a main microcontroller unit. Furthermore, a plurality of the main microcontroller units is connected to the uppermost electronic control unit. The electronic control unit generally has a generic term of a unit for controlling an analog apparatus.

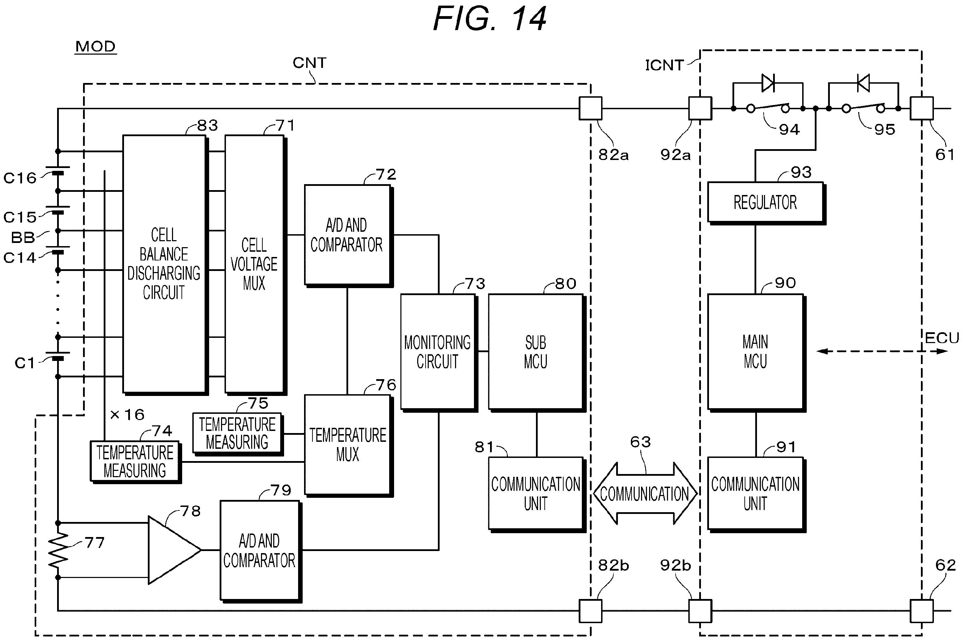

An example of the configuration of each of the module controller CNT and the main controller ICNT will be described with reference to Fig. 14. An electricity storage unit BB is formed of a series connection of n battery cells, for example, 16 battery cells (hereinafter, simply referred to as cells appropriately) C1 to C16. The electricity storage unit BB may have a configuration in which parallel connections (submodules) of a plurality of cells are connected in series. A voltage of each cell is supplied to a cell voltage multiplexer 71, and a voltage of each of the cells C1 to C16 is sequentially selected, and supplied to an A/D converter and comparator 72. Furthermore, a cell balance discharging circuit 83 for discharging each of the cells C1 to C16 by cell balance control is provided.

The voltages of the 16 cells are time-division multiplexed by the cell voltage multiplexer 71, are converted into digital signals by the A/D converter and comparator 72, and are further compared with a voltage threshold value. The A/D converter and comparator 72 outputs digital voltage data of 14 to 18 bits of each cell and a comparison result (for example, a signal of 1 bit) between the voltage of each cell and the voltage threshold value. The output signal of the A/D converter and comparator 72 is supplied to a monitoring circuit 73.

Furthermore, a temperature measuring unit 74 for measuring the temperature of each cell and a temperature measuring unit 75 for measuring the temperature inside an IC are provided. Temperature information from the temperature measuring units 74 and 75 is supplied to a temperature multiplexer 76. The temperature data multiplexed by the temperature multiplexer 76 is supplied to the A/D converter and comparator 72. The A/D converter and comparator 72 generates digital temperature data and outputs a comparison result (for example, a signal of 1 bit) between the digital temperature data and a temperature threshold value. As described above, the A/D converter and comparator 72 also outputs a comparison result on cell voltage data. An A/D converter and a comparator may be provided separately for temperature.

A resistor 77 for detecting a current flowing through the electricity storage unit (cells C1 to C16) is connected to the electricity storage unit BB in series. Voltages at both ends of the resistor 77 are supplied to an A/D converter and comparator 79 thorough an amplifier 78. The A/D converter and comparator 79 outputs digital current data and a comparison result (for example, a signal of 1 bit) between a current value and a current threshold value. The output signal of the A/D converter and comparator 79 is supplied to the monitoring circuit 73.

The signal of 1 bit output from the A/D converter and comparator 72 is a detection signal indicating normality/abnormality of the voltage of each cell. During charging, the voltage of each cell is compared with a predetermined value, and a detection signal indicating whether the voltage is an overvoltage OV is generated. During discharging, the voltage of each cell is compared with a predetermined value, and a detection signal indicating whether the voltage is an undervoltage UV is generated. Furthermore, another signal of 1 bit output from the A/D converter and comparator 72 is a detection signal indicating an overtemperature OT of the temperature. The signal of 1 bit output from the A/D converter and comparator 79 is a detection signal indicating an overcurrent OC.

The above-described detection signal, voltage value data, current value data, and temperature data are supplied from the monitoring circuit 73 to the submicrocontroller unit 80. The monitoring circuit 73 is connected to the submicrocontroller unit 80 by serial communication, for example. The submicrocontroller unit 80 performs diagnosis processing of the module controller CNT as necessary using the received detection signal. The detection signal and the data indicating the result of the diagnosis processing, output from the submicrocontroller unit 80 are supplied to a communication unit 81.

The communication unit 81 is an interface for performing serial communication, for example, I2C communication through a main microcontroller unit of the main controller ICNT and the bus 63. Note that a wired or wireless communication path can be used as a communication method. A submicrocontroller unit of a module controller of another electricity storage module is connected to the bus 63.

A positive electrode terminal 82a and a negative electrode terminal 82b of the electricity storage module MOD are connected to a positive electrode terminal 92a and a negative electrode terminal 92b of the main controller ICNT through power supply lines, respectively.

A communication unit 91 of the main controller ICNT is connected to the bus 63. A main microcontroller unit 90 is connected to the communication unit 91, and communication performed through the communication unit 91 is controlled by the main microcontroller unit 90. Furthermore, the main microcontroller unit 90 is connected to an upper electronic control unit ECU through a communication path.

A power supply voltage generated by a regulator 93 is supplied to the main microcontroller unit 90. The main controller ICNT includes the positive electrode terminal 61 and a negative electrode terminal 62. Switching units 94 and 95 are inserted in series into an output path of the power supply. These switching units 94 and 95 are controlled by the main microcontroller unit 90. Each of the switching units 94 and 95 includes a switch element (a field effect transistor (FET) and an insulated gate bipolar transistor (IGBT)) or the like, and a parallel diode.

When charging is prohibited, the switching unit 94 is turned off. When discharging is prohibited, the switching unit 95 is turned off. Furthermore, when charging or discharging is not performed, the switch element of each of the switching units 94 and 95 is turned off. The main microcontroller unit 90 transmits data received from the electricity storage module MOD to the upper electronic control unit ECU. Furthermore, the main microcontroller unit 90 receives a control signal concerning charging/discharging from the electronic control unit ECU.

A charging circuit is connected to the positive electrode terminal 61 and the negative electrode terminal 62 to charge the cells C1 to C16. As described above, during charging, an inflection point of a charging current in a constant-voltage charging section is detected. Furthermore, the temperature immediately before start of charging at the time of previous charging is stored, and this temperature is compared with the temperature immediately before start of charging this time. In a case where the inflection point is detected and the temperature is equal to or lower than the previous temperature, the charging device is caused to reduce a charging current to a value of 80% or less and 40% or more of an initial setting. With such control, as described above, the average charging time does not become too long, and a value of capacity retention ratio after the cycles can be good.

### "Electricity storage system in residence"

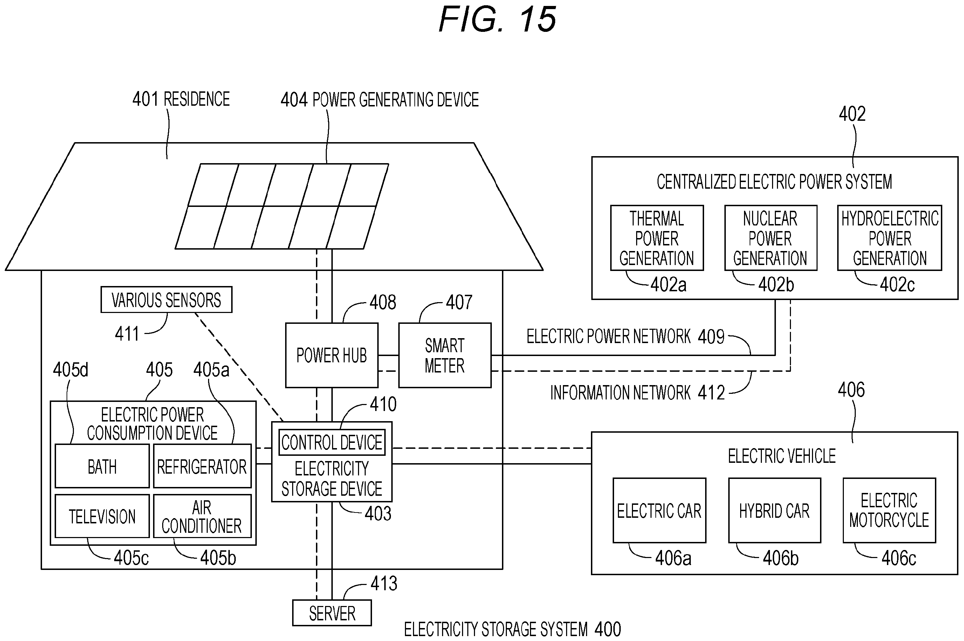

An example in which an electricity storage device using the battery of the present technology is applied to a residential electricity storage system will be described with reference to Fig. 15. For example, in an electricity storage system 400 for a residence 401, electric power is supplied from a centralized electric power system 402 such as thermal power generation 402a, nuclear power generation 402b, or hydroelectric power generation 402c to an electricity storage device 403 through an electric power network 409, an information network 412, a smart meter 407, a power hub 408, or the like. At the same time, electric power is supplied from an independent power supply such as a home power generating device 404 to the electricity storage device 403. Electric power supplied to the electricity storage device 403 is stored. Electric power used in the residence 401 is supplied using the electricity storage device 403. Not only the residence 401 but also a building can use a similar electricity storage system.

The residence 401 is provided with the power generating device 404, an electric power consumption device 405, the electricity storage device 403, a control device 410 for controlling devices, the smart meter 407, and various sensors 411 for acquiring information. The devices are connected to each other through the electric power network 409 and the information network 412. As the power generating device 404, a solar cell, a fuel cell, or the like is used, and generated electric power is supplied to the electric power consumption device 405 and/or the electricity storage device 403. The electric power consumption device 405 is a refrigerator 405a, an air conditioner 405b as an air conditioning device, a television 405c as a television receiver, a bath 405d, or the like. Furthermore, the electric power consumption device 405 further includes an electric vehicle 406. The electric vehicle 406 is an electric car 406a, a hybrid car 406b, or an electric motorcycle 406c.

The battery of the present technology is applied to the electricity storage device 403. The battery of the present technology may be constituted by the above-described lithium ion secondary battery, for example. The smart meter 407 measures the use amount of commercial electric power, and transmits the measured use amount to an electric power company . The electric power network 409 may be any one of DC power supply, AC power supply, and non-contact power supply, or a combination of two or more thereof.

Examples of the various sensors 411 include a human sensor, an illuminance sensor, an object detection sensor, a consumed electric power sensor, a vibration sensor, a contact sensor, a temperature sensor, and an infrared sensor. Information acquired by the various sensors 411 is transmitted to the control device 410. A weather condition, a human condition, or the like is understood due to the Information from the sensors 411, and energy consumption can be minimized by automatic control of the electric power consumption device 405. Furthermore, the control device 410 can transmit information on the residence 401 to an external electric power company or the like through internet.

The power hub 408 performs processing such as branching of an electric power line or DC-AC conversion . A communication method of the information network 412 connected to the control device 410 includes a method using a communication interface such as universal asynchronous receiver-transceiver (UART) and a method using a sensor network by a wireless communication standard, such as Bluetooth, ZigBee, or Wi-Fi. The Bluetooth method is applied to multimedia communication and can perform one-to-many connection communication. ZigBee uses a physical layer of Institute of Electrical and Electronics Engineers (IEEE) 802.15.4. IEEE 802.15.4 is a name of a short-distance wireless network standard called personal area network (PAN) or wireless (W) PAN.

The control device 410 is connected to an external server 413. This server 413 may be managed by any one of the residence 401, an electric power company, and a service provider. For example, information transmitted or received by the server 413 is consumption electric power information, life pattern information, electric power charge, weather information, natural disaster information, or information on electric power transaction. A home electric power consumption device (for example, a television receiver) may transmit or receive the information, but an outside-home device (for example, a mobile phone) may transmit or receive the information. An apparatus having a display function, such as a television receiver, a mobile phone, or a personal digital assistant (PDA), may display the information.

The control device 410 for controlling each of the units is constituted by a central processing unit (CPU), a random access memory (RAM), a read only memory (ROM), and the like, and is housed in the electricity storage device 403 in this example. The control device 410 is connected to the electricity storage device 403, the home power generating device 404, the electric power consumption device 405, the various sensors 411, and the server 413 through the information network 412, and for example, adjusts the use amount of commercial electric power and a power generation amount. Note that the control device 410 may have a function, and the like, such as performing electric power transaction in an electric power market.

As described above, the electricity storage device 403 can store not only electric power from the centralized electric power system 402 such as the thermal power generation 402a, the nuclear power generation 402b, or the hydroelectric power generation 402c but also electric power generated by the home power generating device 404 (solar power generation or wind power generation). Therefore, even when the electric power generated by the home power generating device 404 fluctuates, control for keeping the amount of electric power to be sent to an outside constant or discharging by a necessary amount can be performed. For example, the following method of use is possible. That is, electric power obtained by solar power generation is stored in the electricity storage device 403, midnight electric power the charge of which is low at night is stored in the electricity storage device 403, and electric power stored in the electricity storage device 403 is used by discharging in daytime in which electric power charge is high.

Note that, in this example, the control device 410 housed in the electricity storage device 403 has been exemplified, but the control device 410 may be housed in the smart meter 407, or may be formed alone. Furthermore, the electricity storage system 400 may be used for a plurality of homes in a multiple dwelling house or a plurality of detached houses.

### "Electricity storage system in vehicle"

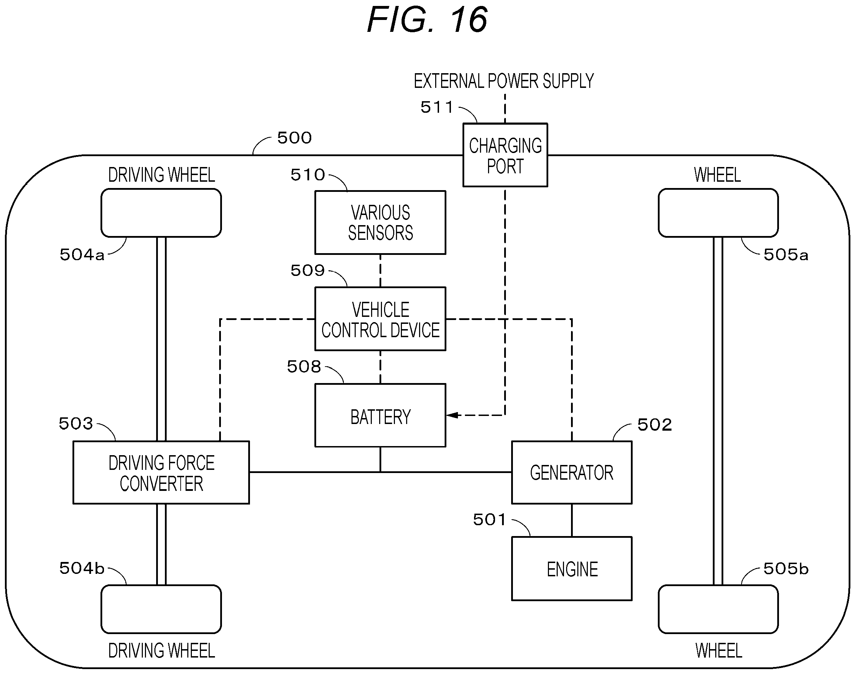

An example in which the present technology is applied to an electric storage system for a vehicle will be described with reference to Fig. 16. Fig. 16 schematically illustrates an example of a configuration of a hybrid vehicle adopting a series hybrid system to which the present technology is applied. The series hybrid system is a car traveling with an electric power driving force converter using electric power generated by a generator driven by an engine or electric power obtained by temporarily storing the generated electric power in a battery.

An engine 501, a generator 502, an electric power driving force converter 503, a driving wheel 504a, a driving wheel 504b, a wheel 505a, a wheel 505b, a battery 508, a vehicle control device 509, various sensors 510, and a charging port 511 are mounted in a hybrid vehicle 500. The above-described battery of the present technology is applied to the battery 508.

The hybrid vehicle 500 travels using the electric power driving force converter 503 as a power source. An example of the electric power driving force converter 503 is a motor. The electric power driving force converter 503 operates by electric power of the battery 508, and a rotating force of the electric power driving force converter 503 is transmitted to the driving wheels 504a and 504b. Note that the electric power driving force converter 503 can be applied to both an AC motor and a DC motor by using DC-AC or reverse conversion (AC-DC conversion) at necessary portions. The various sensors 510 control an engine speed through the vehicle control device 509, or control an opening degree (throttle opening degree) of a throttle valve (not illustrated). The various sensors 510 include a velocity sensor, an acceleration sensor, an engine speed sensor, and the like.

A rotating force of the engine 501 is transmitted to the generator 502, and electric power generated by the generator 502 can be stored in the battery 508 by the rotating force.

When the hybrid vehicle 500 is decelerated by a brake mechanism (not illustrated), a resistance force during the deceleration is added to the electric power driving force converter 503 as a rotating force, and regenerative electric power generated by the electric power driving force converter 503 due to this rotating force is stored in the battery 508.

By being connected to an external power supply of the hybrid vehicle 500, the battery 508 receives electric power from the external power supply by using the charging port 511 as an input port, and can store the received electric power.

Although not illustrated, an information processing device for performing information processing on vehicle control on the basis of information on a secondary battery may be included. Examples of such an information processing device include an information processing device for displaying a battery remaining amount on the basis of information on the battery remaining amount.

Note that the above description has been made by exemplifying a series hybrid car traveling with a motor using electric power generated by a generator driven by an engine or electric power obtained by temporarily storing the generated electric power in a battery. However, the present technology can be applied effectively also to a parallel hybrid car using both an engine and a motor as a driving source and appropriately switching three systems of traveling only by the engine, traveling only by the motor, and traveling by both the engine and the motor to be used. Furthermore, the present technology can be applied effectively also to a so-called electric vehicle traveling by driving only with a driving motor without use of an engine.

### <5. Modification Example>

Hereinabove, the embodiment of the present technology has been described specifically. However, the present technology is not limited to the above-described embodiment, but various modifications based on a technical idea of the present technology can be made.

In addition, the configurations, the methods, the steps, the shapes, the materials, the numerical values, and the like in the above-described embodiment can be combined with one another as long as not departing from the scope of the present invention as defined in the appended claims.

For example, the numerical values, the structures, the shapes, the materials, the raw materials, the manufacturing processes, and the like described in the above-described embodiment and Examples are merely examples, and a numerical value, a structure, a shape, a material, a raw material, a manufacturing process, and the like different from these may be used as necessary.

In addition, the configurations, the methods, the steps, the shapes, the materials, the numerical values, and the like in the above-described embodiment and Examples can be combined with one another as long as not departing from the scope of the present invention as defined in the appended claims.

For example, in the embodiment and Examples, the case where the battery structure is a laminate film type and the case where the electrode body has a wound structure or a laminated structure have been described as examples, but the present technology is not limited thereto. The electrolyte layer of the present technology can be similarly applied to a case having another battery structure such as a cylindrical shape, a coin shape, a rectangular shape, or a button shape.

In place of the above-described electrolyte layer, another electrolyte layer formed of the following electrolyte may be used. As a first example of the other electrolyte layer, for example, a solid electrolyte layer containing endothermic particles, an ion conductive polymer material, and an electrolyte salt, and formed of a solid electrolyte having ion conductivity due to the ion conductive polymer material and the electrolyte salt may be used. Examples of the ion conductive polymer material include polyether, polyester, polyphosphazene, and polysiloxane. As a second example of the other electrolyte layer, for example, a solid electrolyte layer containing endothermic particles and an ion conductive polymer material, and formed of a solid electrolyte having ion conductivity due to the polymer material may be used. As a third example of the other electrolyte layer, a solid electrolyte layer containing endothermic particles and an ion conductive inorganic material, and formed of a solid electrolyte having ion conductivity due to the inorganic material may be used. Examples of the ion conductive inorganic material include ion conductive ceramics, ion conductive crystals, and ion conductive glass.

### REFERENCE SIGNS LIST

- 1: Nonaqueous electrolyte battery
- 5: Exterior member
- 4: Wound electrode body
- 7: Positive electrode
- 7A: Positive electrode current collector
- 7B: Positive electrode active material layer
- 8: Negative electrode
- 8A: Negative electrode current collector
- 8B: Negative electrode active material layer
- 9: Separator
- 2: Positive electrode lead
- 3: Negative electrode lead
- 31: Battery cell
- 41: Battery pack

## Claims

1. A charging method for charging a lithium ion secondary battery having a positive electrode, a negative electrode, and an electrolyte housed in an exterior body, the charging method comprising:
charging with an environmental temperature of T1 immediately before start of charging;
calculating a value obtained by second-order differentiation of a charging current in a constant-voltage charging section with respect to an amount of electric charge or time during the charging; and
in a case that a change in a sign of the value calculated by second-order differentiation from positive to negative or from negative to positive is observed during the charging and an ambient temperature immediately before start of subsequent charging is T2 or lower where T1 is a temperature of T2 or higher, making the whole or a part of a current in a constant-current charging section lower than an initial setting of the constant current charging.

2. The charging method according to claim 1, wherein
in a case where a change in a sign of the value calculated by second-order differentiation from positive to negative or from negative to positive is observed, if an ambient temperature immediately before start of next and subsequent charging is T2 or lower,
the whole or a part of a current in the constant-current charging current section is reduced to a value of 80% or less and 40% or more of the initial setting.

3. The charging method according to claim 1 or 2, wherein the value calculated by second-order differentiation is observed in a period in which a charging current value in the constant-voltage charging attenuates from 100% at the time of start of the constant-voltage charging to 10%.

4. The charging method according to any of claims 1 to 3, wherein
constant-current charging, pulse charging, or step charging for performing charging by stepwise changing a current value of a constant current is performed until a battery voltage reaches a set voltage value, and
the constant-voltage charging is performed after the battery voltage reaches the set voltage value.

5. The charging method according to any of claims 1 to 4, wherein
when the initial fully charged amount of the battery is 100%,
only in a part corresponding to a charging electric quantity after 30% of the initial fully charged amount in a constant-current charging section,
the constant-current charging current is reduced.

6. A battery device comprising:
a lithium ion secondary battery having a positive electrode, a negative electrode, and an electrolyte housed in an exterior body; and
a control unit (32) that is configured to control charging of the lithium ion secondary battery,
wherein the control unit (32) is configured:
during charging with an environmental temperature of T1 immediately before start of charging, to calculate a value obtained by second-order differentiation of a charging current in a constant-voltage charging section with respect to an amount of electric charge or time during the charging, and
in a case that a change in a sign of the value calculated by second-order differentiation from positive to negative or from negative to positive is observed during the charging and an ambient temperature immediately before start of subsequent charging is T2 or lower where T1 is a temperature of T2 or higher, to control charging such that the whole or a part of a current in a constant-current charging section is lower than an initial setting of the constant current charging.

7. The battery device according to claim 6, wherein
in a case where a change in a sign of the value calculated by second-order differentiation from positive to negative or from negative to positive is observed, if an ambient temperature immediately before start of next and subsequent charging is T2 or lower,
the whole or a part of a current in the constant-current charging current section is reduced to a value of 80% or less and 40% or more of the initial setting.

8. The battery device according to claim 6 or 7, wherein the value calculated by second-order differentiation is observed in a period in which a charging current value in the constant-voltage charging attenuates from 100% at the time of start of the constant-voltage charging to 10%.

9. A charging device (51) for charging a lithium ion secondary battery having a positive electrode, a negative electrode, and an electrolyte housed in an exterior body, the charging device comprising a control unit (53) that is configured to control charging of the lithium ion secondary battery,
wherein the control unit (32) is configured:
during charging with an environmental temperature of T1 immediately before start of charging, to calculate a value obtained by second-order differentiation of a charging current in aconstant-voltage charging section with respect to an amount of electric charge or time during the charging, and
in a case that a change in a sign of the value calculated by second-order differentiation from positive to negative or from negative to positive is observed during the charging and an ambient temperature immediately before start of subsequent charging is T2 or lower where T1 is a temperature of T2 or higher, to perform charging so as to make the whole or a part of a current in a constant-current charging section lower than an initial setting of the constant current charging.

10. A degradation diagnosis method comprising:
charging a lithium ion secondary battery with an environmental temperature of T1 immediately before start of charging, the lithium ion secondary battery having a positive electrode, a negative electrode, and an electrolyte housed in an exterior body;
calculating a value obtained by second-order differentiation of a charging current in a constant-voltage charging section with respect to an amount of electric charge or time during the charging; and
in a case that a change in a sign of the value calculated by second-order differentiation from positive to negative or from negative to positive is observed during the charging and an ambient temperature immediately before start of subsequent charging is T2 or lower where T1 is a temperature of T2 or higher, judging that the lithium ion secondary battery is degraded.

11. A battery pack comprising the battery device according to any of claims 6 to 8 and an exterior body enclosing the battery.

12. An electric vehicle (500) comprising:
the battery device according to any of claims 6 to 8;
a converter (503) for converting electric power supplied from the battery into a driving force of the vehicle (500); and
a control device (509) for performing information processing on vehicle control on the basis of information on the battery.

13. An electricity storage device comprising the battery device according to any of claims 6 to 8, wherein the electricity storage device supplies electric power to an electronic apparatus connected to the battery device.

## Patentansprüche

1. Ladeverfahren zum Laden einer Lithiumionen-Sekundärbatterie, die eine positive Elektrode, eine negative Elektrode und ein Elektrolyt beherbergt in einem Außenkörper aufweist, wobei das Ladeverfahren aufweist:
Laden mit einer Umgebungstemperatur von T1 unmittelbar vor dem Start des Ladens;
Berechnen eines Werts, der erlangt wird durch eine Ableitung zweiter Ordnung eines Ladestroms in einem Konstant-Spannungs-Ladeabschnitt in Bezug auf eine Menge einer elektrischen Ladung oder eine Zeit während des Ladens; und
in einem Fall, das ein Ändern eines Vorzeichens des Werts, der Ableitung zweiter Ordnung berechnet ist, von positiv zu negativ oder von negativ zu positiv während des Ladens beobachtet wird und eine Umgebungstemperatur unmittelbar vor dem Starten des nachfolgenden Ladens T2 oder niedriger ist, wobei T1 eine Temperatur von T2 oder höher ist, Einstellen des gesamten oder eines Teils eines Stroms in einem Konstant-Strom-Ladeabschnitts geringer als eine ursprüngliche Einstellung des Konstant-Strom-Ladens.

2. Ladeverfahren nach Anspruch 1, wobei
in einem Fall, wo ein Ändern eines Vorzeichens des Werts, der durch Ableitung zweiter Ordnung berechnet ist, von positiv zu negativ oder von negativ zu positiv beobachtet wird, falls eine Umgebungstemperatur unmittelbar vor dem Starten eines Nächsten und nachfolgenden Ladens T2 oder niedriger ist,
der gesamte oder ein Teil eines Stroms in dem Konstant-Strom-Ladestromabschnitt reduziert wird auf einen Wert von 80 % oder weniger und 40 % oder mehr der ursprünglichen Einstellung.

3. Ladeverfahren nach Anspruch 1 oder 2, wobei der Wert, der durch Ableitung zweiter Ordnung berechnet ist, in einer Zeitdauer beobachtet wird, in der ein Ladestromwert in dem Konstant-Spannungs-Laden sich verringert von 100 % zum Zeitpunkt des Startens des Konstant-Spannungs-Ladens auf 10 %.

4. Ladeverfahren nach einem der Ansprüche 1 bis 3, wobei
Konstant-Strom-Laden, Pulsladen oder Stufenladen zum Durchführen durch stufenweises Ändern eines Stromwerts eines Konstant-Stroms durchgeführt wird, bis eine Batteriespannung einen festgesetzten Spannungswert erreicht, und
das Konstant-Spannungs-Laden durchgeführt wird nachdem die Batteriespannung den festgesetzten Spannungswert erreicht.

5. Ladeverfahren nach einem der Ansprüche 1 bis 4, wobei
wenn die ursprüngliche, vollständig geladene Menge der Batterie 100 % ist,
nur in einem Teil entsprechend einer elektrischen Ladequantität nach 30 % der ursprünglichen, vollständig geladenen Menge in einem Konstant-Strom-Ladeabschnitt,
der Konstant-Strom-Ladestrom reduziert wird.

6. Batterieeinrichtung, mit:
eine Lithiumionen-Sekundärbatterie, die eine positive Elektrode, eine negative Elektrode und ein Elektrolyt beherbergt in einem Außenkörper aufweist; und
einer Steuerungseinheit (32), die dazu konfiguriert ist, ein Laden der Lithiumionen-Sekundärbatterie zu steuern,
wobei die Steuerungseinheit (32) dazu konfiguriert ist:
während des Ladens mit einer Umgebungstemperatur von T1 unmittelbar vor dem Start des Ladens, einen Wert zu berechnen der erlangt wird durch Ableitung zweiter Ordnung eines Ladestroms in einem Konstant-Spannungs-Ladeabschnitt in Bezug auf eine Menge von elektrischer Ladung oder Zeit während des Ladens, und
in einem Fall, das ein Ändern in einem Vorzeichens des durch Ableitung zweiter Ordnung berechneten Werts von positiv zu negativ oder von negativ zu positiv beobachtet wird während des Ladens in einer Umgebungstemperatur unmittelbar vor dem Start eines nachfolgenden Ladens T2 oder niedriger ist, wo bei T1 eine Temperatur von T2 oder höher ist, Laden derart zu steuern, dass die gesamte oder ein Teil eines Stroms in einem Konstant-Strom-Ladeabschnitt geringer als eine ursprüngliche Einstellung des Konstant-Strom-Ladens ist.

7. Batterieeinrichtung nach Anspruch 6, wobei
in einem Fall, wo ein Ändern eines Vorzeichens des Werts, der durch Ableitung zweiter Ordnung berechnet ist, von positiv zu negativ oder von negativ zu positiv beobachtet wird, falls eine Umgebungstemperatur unmittelbar vor einem Start eines nächsten und nachfolgenden Ladens T2 oder geringer ist,
der gesamte oder ein Teil eines Stroms in dem Konstant-Strom-Ladestromabschnitt reduziert ist auf einen Wert von 80 % oder weniger und 40 % oder mehr einer ursprünglichen Einstellung.

8. Batterieeinrichtung nach Anspruch 6 oder 7, wobei der durch Ableitung zweiter Ordnung berechnete Wert in einer Zeitdauer beobachtet wird, in der ein Ladestromwert in dem Konstant-Spannungs-Laden sich von 100 % zum Zeitpunkt des Startens des Konstant-Spannungs-Ladens auf 10 % verringert.

9. Ladeeinrichtung (51) zum Laden einer Lithiumionen-Sekundärbatterie, die eine positive Elektrode, eine negative Elektrode und ein Elektrolyt beherbergt in einem Außenkörper aufweist, wobei die Ladeeinrichtung eine Steuerungseinheit (53) aufweist, die dazu konfiguriert ist, ein Laden der Lithiumionen-Sekundärbatterie zu steuern,
wobei die Steuerungseinheit (32) dazu konfiguriert ist:
während des Ladens mit einer Umgebungstemperatur T1 unmittelbar vor dem Start des Ladens, einen Wert zu berechnen, der erlangt wird durch Ableitung zweiter Ordnung eines Ladestroms in einem Konstant-Spannungs-Ladeabschnitt in Bezug auf eine Menge einer elektrischen Ladung oder einer Zeit während des Ladens, und
in einem Fall, das eine Änderung in einem Vorzeichen des Werts, der durch Ableitung zweiter Ordnung berechnet ist, von positiv zu negativ oder von negativ zu positiv während des Ladens beobachtet wird und eine Umgebungstemperatur unmittelbar vor dem Start des nachfolgenden Ladens T2 oder geringer ist, wobei T1 eine Temperatur von T2 oder höher ist, Durchführen eines Ladens, um den gesamten oder einen Teil eines Stroms in einem Konstant-Strom-Ladeabschnitt geringer als eine ursprüngliche Einstellung des Konstant-Strom-Ladens zu machen.

10. Ein Verschlechterungsdiagnoseverfahren, mit:
Laden einer Lithiumionen-Sekundärbatterie mit einer Umgebungstemperatur von T1 unmittelbar vor dem Starten eines Ladens, wobei die Lithiumionen-Sekundärbatterie eine positive Elektrode, eine negative Elektrode und ein Elektrolyt beherbergt in einem Außenkörper aufweist;
Berechnen eines Werts, der erlangt wird durch Ableitung zweiter Ordnung eines Ladestroms in einem Konstant-Spannungs-Ladeabschnitt in Bezug auf eine Menge einer elektrischen Ladung oder einer Zeit während des Ladens; und
in einem Fall, das eine Änderung eines Vorzeichens in dem Wert, der durch Ableitung zweiter Ordnung berechnet ist, von positiv zu negativ oder von negativ zu positiv beobachtet wird während des Ladens und eine Umgebungstemperatur unmittelbar vor dem Start eines nachfolgenden Ladens T2 oder geringer ist, wobei T1 eine Temperatur von T2 oder höher ist, Beurteilen, dass die Lithiumionen-Sekundärbatterie verschlechtert ist.

11. Batteriepack mit der Batterieeinrichtung nach einem der Ansprüche 6 bis 8 und einem Außenkörper, der die Batterie einschließt.

12. Elektrofahrzeug (500), mit:
eine Batterieeinrichtung nach einem der Ansprüche 6 bis 8;
einem Wandler (503) zum Wandeln elektrischer Leistung, die von der Batterie zugeführt wird, in einer Antriebskraft des Fahrzeugs (500); und
einer Steuerungseinrichtung (509) zum Durchführen einer Informationsverarbeitung an einer Fahrzeugsteuerung auf der Basis von Informationen über die Batterie.

13. Elektrospeichereinrichtung mit der Batterieeinrichtung nach einem der Ansprüche 6 bis 8, wobei die Elektrospeichereinrichtung elektrische Leistung zu einer elektronischen Vorrichtung zuführt, die mit der Batterieeinrichtung verbunden ist.

## Revendications

1. Procédé de charge pour charger une batterie secondaire au lithium-ion ayant une électrode positive, une électrode négative, et un électrolyte logé dans un corps extérieur, le procédé de charge comprenant :
la charge avec une température environnante de T1 immédiatement avant le début de la charge ;
le calcul d'une valeur obtenue par différenciation de second ordre d'un courant de charge dans une section de charge à tension constante par rapport à une quantité de charge électrique ou de temps pendant la charge ; et
dans un cas où un changement d'un signe de la valeur calculée par différenciation de second ordre de positif à négatif ou de négatif à positif est observé pendant la charge et où une température ambiante immédiatement avant le début de la charge subséquente est T2 ou plus basse, T1 étant une température de T2 ou plus élevée, le fait de rendre l'ensemble ou une partie d'un courant dans une section de charge à courant constant inférieur(e) à un réglage initial de la charge à courant constant.

2. Procédé de charge selon la revendication 1, où
dans un cas où un changement d'un signe de la valeur calculée par différenciation de second ordre de positif à négatif ou de négatif à positif est observé, si une température ambiante immédiatement avant le début de la charge suivante et subséquente est T2 ou plus basse,
l'ensemble ou une partie d'un courant dans la section de courant de charge à courant constant est réduit(e) à une valeur de 80 % ou moins et 40 % ou plus du réglage initial.

3. Procédé de charge selon la revendication 1 ou la revendication 2, où la valeur calculée par différenciation de second ordre est observée dans une période dans laquelle une valeur de courant de charge dans la charge à tension constante diminue de 100 % au moment du début de la charge à tension constante à 10 %.

4. Procédé de charge selon l'une quelconque des revendications 1 à 3, où
une charge à courant constant, une charge d'impulsion, ou une charge en étapes pour réaliser une charge en changeant par étapes une valeur de courant d'un courant constant est réalisée jusqu'à ce qu'une tension de batterie atteigne une valeur de tension définie, et
la charge à tension constante est réalisée après que la tension de batterie a atteint la valeur de tension définie.

5. Procédé de charge selon l'une quelconque des revendications 1 à 4, où
lorsque la quantité initiale complètement chargée de la batterie est de 100 %,
uniquement dans une partie correspondant à une quantité électrique de charge après 30 % de la quantité complètement chargée initiale dans une section de charge à courant constant,
le courant de charge à courant constant est réduit.

6. Dispositif de batterie comprenant :
une batterie secondaire au lithium-ion ayant une électrode positive, une électrode négative, et un électrolyte logé dans un corps extérieur ; et
une unité de commande (32) qui est configurée pour commander la charge de la batterie secondaire au lithium-ion,
l'unité de commande (32) étant configurée :
pendant la charge avec une température environnante de T1 immédiatement avant le début de la charge, pour calculer une valeur obtenue par différenciation de second ordre d'un courant de charge dans une section de charge à tension constante par rapport à une quantité de charge électrique ou de temps pendant la charge, et
dans un cas où un changement d'un signe de la valeur calculée par différenciation de second ordre de positif à négatif ou de négatif à positif est observé pendant la charge et où une température ambiante immédiatement avant le début de la charge subséquente est T2 ou plus basse, T1 étant une température de T2 ou plus élevée, le fait de commander la charge de telle sorte que l'ensemble ou une partie d'un courant dans une section de charge à courant constant soit inférieur(e) à un réglage initial de la charge à courant constant.

7. Dispositif de batterie selon la revendication 6, où
dans un cas où un changement d'un signe de la valeur calculée par une différenciation de second ordre de positif à négatif ou de négatif à positif est observé, si une température ambiante immédiatement avant le début de la charge subséquente et subséquente est T2 ou plus basse,
l'ensemble ou une partie d'un courant dans la section de courant de charge à courant constant est réduit(e) à une valeur de 80 % ou moins et 40 % ou plus du réglage initial.

8. Dispositif de batterie selon la revendication 6 ou la revendication 7, où la valeur calculée par différenciation de second ordre est observée dans une période dans laquelle une valeur de courant de charge dans la charge à tension constante diminue de 100 % au moment du début de la charge à tension constante à 10 %.

9. Dispositif de charge (51) pour charger une batterie secondaire au lithium-ion ayant une électrode positive, une électrode négative, et un électrolyte logé dans un corps extérieur, le dispositif de charge comprenant une unité de commande (53) qui est configurée pour commander la charge de la batterie secondaire au lithium-ion,
l'unité de commande (32) étant configurée :
pendant la charge avec une température environnante de T1 immédiatement avant le début de la charge, pour calculer une valeur obtenue par différenciation de second ordre d'un courant de charge dans une section de charge à tension constante par rapport à une quantité de charge électrique ou de temps pendant la charge, et
dans un cas où un changement d'un signe de la valeur calculée par différenciation de second ordre de positif à négatif ou de négatif à positif est observé pendant la charge et où une température ambiante immédiatement avant le début de la charge subséquente est T2 ou plus basse, T1 étant une température de T2 ou plus élevée, le fait de réaliser une charge de façon à rendre l'ensemble ou une partie d'un courant dans une section de charge à courant constant inférieur(e) à un réglage initial de la charge à courant constant.

10. Procédé de diagnostic de dégradation comprenant :
la charge d'une batterie secondaire au lithium-ion avec une température environnante de T1 immédiatement avant le début de la charge, la batterie secondaire au lithium-ion ayant une électrode positive, une électrode négative, et un électrolyte logé dans un corps extérieur ;
le calcul d'une valeur obtenue par différenciation de second ordre d'un courant de charge dans une section de charge à tension constante par rapport à une quantité de charge électrique ou de temps pendant la charge ; et
dans un cas où un changement d'un signe de la valeur calculée par différenciation de second ordre de positif à négatif ou de négatif à positif est observé pendant la charge et où une température ambiante immédiatement avant le début de la charge subséquente est T2 ou plus basse, T1 étant une température de T2 ou plus élevée, le fait de juger que la batterie secondaire au lithium-ion est dégradée.

11. Bloc-batterie comprenant le dispositif de batterie selon l'une quelconque des revendications 6 à 8 et un corps extérieur renfermant la batterie.

12. Véhicule électrique (500) comprenant :
le dispositif de batterie selon l'une quelconque des revendications 6 à 8 ;
un convertisseur (503) pour convertir l'énergie électrique fournie par la batterie en une force d'entraînement du véhicule (500) ; et
un dispositif de commande (509) pour réaliser un traitement d'informations sur la commande de véhicule sur la base d'informations sur la batterie.

13. Dispositif de stockage d'électricité comprenant le dispositif de batterie selon l'une quelconque des revendications 6 à 8, le dispositif de stockage d'électricité fournissant de l'énergie électrique à un appareil électronique connecté au dispositif de batterie.
